(19) Europäisches Patentamt
European Patent Office
Office européen des brevets

(11) **EP 4 700 446 A1**

(12) **EUROPEAN PATENT APPLICATION**

(43) Date of publication:
**25.02.2026 Bulletin 2026/09**

(21) Application number: **25195493.9**

(22) Date of filing: **12.08.2025**

(51) International Patent Classification (IPC):
**G02B 6/02** (2006.01)      **G02B 6/036** (2006.01)
**C03B 37/027** (2006.01)

(52) Cooperative Patent Classification (CPC):
**G02B 6/02042; G02B 6/03627; C03B 37/027;
G02B 6/02028**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.08.2024 IN 202411061049**

(71) Applicant: **Sterlite Technologies Limited
Gurugram, Haryana 122102 (IN)**

(72) Inventors:
• **MALVIYA, Apeksha
122102 Gurugram (IN)**
• **MUNIGE, Srinivas
122102 Gurugram (IN)**
• **PANDEY, Anand
122102 Gurugram (IN)**

(74) Representative: **Valet Patent Services Limited
c/o Caya 83713X
Am Börstig 5
96052 Bamberg (DE)**

(54) **MULTICORE FIBER HAVING ALTERNATED CORES WITH AND WITHOUT TRENCH**

(57)    The present disclosure provides multicore fiber (100, 200, 300) with a cladding region (106), a plurality of non-trenched core regions (104), and a plurality of trench-assisted core regions (102) such that the plurality of non-trenched core regions (104) and the plurality of trench-assisted core regions (102) are arranged in a predefined lattice in the cladding region. Each of the plurality of trench-assisted core regions (102) are defined by a core region (108) and a trench region (110) surrounding the core region (108) such that a radial thickness of an un-doped region between the core region (108) and the trench region (110) is less than 1 micrometres (μm).

**FIG. 1A**

EP 4 700 446 A1

**FIG. 1B**

## Description

## TECHNICAL FIELD

Embodiments of the present disclosure relate to the field of wireless communication networks of optical fibres, and in particular, relates to a multicore optical fiber having alternative trench.

The present application claims the benefit of Indian Application No. 202411061049 titled "MULTICORE FIBER HAVING ALTERNATIVE TRENCH" filed by the applicant on August 12, 2024, which is incorporated herein by reference in its entirety.

## Background Art

Telecommunications networks include access networks where end-user subscribers connect to service providers. With the advancement of science and technology, various modem technologies are being employed for communication purposes. To meet increasing consumer demands, bandwidth requirements for providing high speed data and video services over access networks are growing rapidly. Being one of the most important modem communication technologies, the optical fiber communication technology uses a variety of optical fiber cables.

Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

Generally two main categories of optical fibers exist: multimode fibers and single-mode fibers. Conventionally, step-index fibers, also called SMF fibers ("Single Mode Fibers") are used as line fibers for optical fiber transmission systems in which a single mode of light is transmitted as a carrier for propagation at a time. In a single-mode optical fiber, the signal propagates in a fundamental LP01 mode that is guided in the fiber core, while the higher order modes (e.g., the LP11 mode) are strongly attenuated. The core of a single-mode optical fiber typically has a diameter of between about 6 microns and 9 microns. These fibers exhibit a chromatic dispersion and a chromatic dispersion slope corresponding to specific telecommunication standards.

However, such SMFs have associated bandwidth limitations. Additionally, such SMFs exhibit non-linear effects due to increase in the data transmission rate beyond a transmission capacity limit. The non-linear effects can further result in low optical signal to noise ratio (OSNR). The bandwidth limitations can be reduced by designing multi-core optical fibers that have multiple glass cores to transmit multiple optical signals. Additionally, by increasing the number of channels per fiber and by optimizing the number of cores and a design of the multi-core optical fiber the bandwidth limitations can be reduced.

A multi-core fiber (MCF) typically comprises a central core surrounded by several satellite cores in a radial pattern surrounding the central core. The multi-core fiber can have multiple glass cores that are surrounded by a glass cladding. Each of the central and satellite cores is potentially a light carrying path, and the MCF thus provides multiple parallel paths for optical signal transmission and/or reception in a single fiber. Generally, an alpha value of the refractive index profile of the core has a significant impact on distribution of light inside the core and thus effects an effective refractive index of guiding modes in the optical fibers.

Generally, the optical fibers are connected to each other via a connector assembly. Cross talk is a very important parameter in multicore fiber tincrease the number of cores inside the multicore fiber, core pitch needs to be decreased which leads to high crosstalk. Known methods in the existing multicore fiber to control the crosstalk on the central core is to envelop each core of the multicore fiber with a trench region. The formation of the trench region can provide a strict limitation of increasing the number of cores in the multicore fiber because it is a costly process and along with the cost the formation of trench in the cores does not completely stop the light to nearby cores and cannot control crosstalk in effective and efficient way.

US patent applications "US8965165" and "US20230204851A1" discloses a multicore fiber with huge cladding diameter to incorporate high number of cores in the cladding so that the pitch (distance between two cores) can be increased to control crosstalk between the cores.

Another US patent application "US20230204849A1" discloses trench assisted multicore fiber where all cores are surrounded by a buffer region and a trench region.

However, there are a few drawbacks in the currently similar technologies providing multicore optical fibers. The multicore optical fibers provided by the current technologies have higher sensitivity to dispersion. The higher sensitivity to dispersion can stretch or flatten an initially sharply defined binary pulses of information. Such degradation can make the optical signals (1s and 0s) more difficult to distinguish from each other at the far end of the multicore optical fiber. Moreover, a requirement of low total crosstalk in interconnects limits the density of cores within the multi-core optical fiber, and thus the capacity scaling, compactness, and cost of the interconnect formed from the multi-core optical fiber.

Further, the known design of multicore fiber in the prior art has complex and high-cost manufacturing because of multiple buffer regions surrounding each core of the MCF and multiple trench regions surrounding each core of the MCF. In one more example, the prior art "US9817183B2" discloses a multicore fiber where multiple cores are disposed in a cladding having large glass diameter and the cores are arranged in a complex arrangement which increase cost.

Thus, there is a need for a multicore fiber having lower crosstalk that solves the problems associated with known multicore fibers with a unique and optimized design.

Accordingly, to overcome the disadvantages of the prior arts, there is a need for a technical solution that overcomes the above-stated limitations in the prior arts. The present disclosure provides a multicore optical fiber having alternative trench.

## SUMMARY OF THE DISCLOSURE

Embodiments of the present disclosure relates to a multicore fiber with a cladding region, a plurality of non-trenched core regions and a plurality of trench-assisted core regions such that the plurality of non-trenched core regions and the plurality of trench-assisted core regions are arranged in a predefined lattice in the cladding region. In particular, each of the plurality of trench-assisted core regions are defined by a plurality of core regions and a plurality of trench regions surrounding the plurality of core regions

According to the first aspect of the present disclosure, a radial thickness of an un-doped region between the plurality of core regions and the plurality of corresponding trench region is less than 1 micrometres ($\mu$m).

According to the second aspect of the present disclosure, the plurality of trench-assisted core regions and the plurality of non-trenched core regions are arranged alternatively. Further, the plurality of trench-assisted core regions and the plurality of non-trenched core regions are arranged at a first predefined radial distance from centre of the multicore fiber.

According to the third aspect of the present disclosure, the plurality of trench-assisted core regions is in a range of 40% to 60% of a total number of core regions in the multicore fiber. Further, the total number of core regions is summation of the plurality of trench-assisted core regions and the plurality of non-trenched core regions in the multicore fiber.

According to the fourth aspect of the present disclosure, each of the plurality of non-trenched core regions is defined by a first maximum refractive index ($n_{1max}$). In particular, each of the plurality of trench-assisted core regions is defined by a second maximum refractive index ($n_{2max}$). Further, the first maximum refractive index ($n_{1max}$) is greater than the second maximum refractive index ($n_{2max}$).

According to the fifth aspect of the present disclosure, the multicore fiber further comprises a central core region disposed in a centre of the cladding region such that an effective refractive index of the central core region is different than effective refractive index of other core regions.

According to the sixth aspect of the present disclosure, when the central core region is a trench assisted central core region, the trench assisted central core region is defined by a third maximum refractive index ($n_{3max}$) such that the third maximum refractive index ($n_{3max}$) is less than the second maximum refractive index ($n_{2max}$) of the other trench assisted core regions.

According to the seventh aspect of the present disclosure, when the central core region is a non-trenched central core region, the non-trenched central core region is defined by a first effective refractive index ($n_{1eff}$) such that the first effective refractive index ($n_{1eff}$) is greater than effective refractive indexes of other core regions of the multicore fiber

According to the eighth aspect of the present disclosure, when the central core region is a trench assisted central core region, the trench assisted central core region is defined by a second effective refractive index ($n_{2eff}$) such that the second effective refractive index ($n_{2eff}$) is less than effective refractive indexes of the other core regions of the multicore fiber.

According to the ninth aspect of the present disclosure, a first trench relative refractive index of a trench assisted central core region is less than second trench relative refractive index of trench assisted core regions.

a glass diameter of the multicore fiber (100, 200, 300) is less than or equal to 125 $\pm$ 0.7 $\mu$m.

According to the tenth aspect of the present disclosure, a phase difference between a pair of nearest trench assisted core region and non-trenched core region is non-zero.

In accordance with an embodiment of the present disclosure, the plurality of trench assisted core regions and the plurality of non-trenched core regions has different propagation constants.

In accordance with an embodiment of the present disclosure, a difference between effective refractive index of a trench assisted core region of the plurality of trench assisted core regions and a non-trenched core regions of the plurality of non-trenched core regions is not equal to zero.

In accordance with an embodiment of the present disclosure, the plurality of trench assisted core regions and the plurality of non-trenched core regions has equal diameter.

In accordance with an embodiment of the present disclosure, the multicore fiber (100, 200, 300) has at least one of (i) a cable cut off wavelength less than or equal to 1260 nanometres (nm), (ii) a pitch to the glass diameter ratio of the multicore fiber (100, 200, 300) is in a range of 0.24 to 0.36, and (iii) a crosstalk of the multicore fiber (100, 200, 300) is less than or equal to -25 dB/ 10 Km.

In accordance with an embodiment of the present disclosure, a mode field diameter of the multicore fiber (100, 200, 300) is in a range of 7.5 to 9.5 $\mu$m at 1310 nm wavelength and, a core multiplication factor is in a range of 0.01 to 0.045.

In accordance with an embodiment of the present disclosure, the first predefined radial distance from a centre of the multicore fiber (100, 200, 300) is in a range of 22.5 $\mu$m to 37.5 $\mu$m.

The foregoing objectives of the present disclosure are attained by employing a multicore optical fiber having alternative trench.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1A is a pictorial snapshot illustrating a cross-sectional view of a multicore fiber in accordance with an embodiment of the disclosure;
Fig. 1B is a pictorial snapshot illustrating a graph representing a Refractive Index (RI) profile comparison of a plurality of trench assisted core regions and a plurality of non-trenched core regions disposed in a cladding region of the multicore fiber in accordance with an embodiment of the disclosure;
Fig. 2A is a pictorial snapshot illustrating a cross-sectional view of a multicore fiber in accordance with an embodiment of the disclosure;
Fig. 2B is a pictorial snapshot illustrating a graph representing a Refractive Index (RI) profile comparison of a plurality of trench assisted core regions, a plurality of non-trenched core regions, and a trench assisted central core region disposed in a cladding region of the multicore fiber in accordance with an embodiment of the disclosure;
Fig. 3A is a pictorial snapshot illustrating a cross-sectional view of a multicore fiber in accordance with an embodiment of the disclosure;
Fig. 3B is a pictorial snapshot illustrating a graph representing a Refractive Index (RI) profile comparison of a plurality of trench assisted core regions, a plurality of non-trenched core regions, and a non-trenched central core region disposed in the cladding region of the multicore fiber in accordance with an embodiment of the disclosure.

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Term"optical fiber" as used herein refers to a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

Term"optical fiber cable" as used herein refers to a cable that encloses one or more optical fibers.

Term"Refractive Index (RI) profile: The refractive index profile of an optical fiber as used herein is referred to as the distribution of refractive indexes in the optical fiber from the core to the outmost cladding layer of the optical fiber. Based on the refractive index profile, the optical fiber may be conFig.ured as a step index fiber. The refractive index of the core of the optical fiber is constant throughout the fiber and is higher than the refractive index of the cladding. Further, the optical fiber may be configured as a graded index fiber, wherein the refractive index of the core gradually varied as a function of the radial distance from the centre of the core.

Term"relative refractive index" as used herein is defined as

$$\Delta\% = 100 \times \frac{ni^2 - n^2}{2ni^2},$$

,

where

ni is maximum refractive index in region i of an optical fiber unless otherwise specified, and n is the average refractive index of an undoped region of the optical fiber. As used herein, the values of the relative refractive index are given in units of "%", unless otherwise specified. In some cases where the refractive index of a region is less than the average refractive index of an undoped region, the relative refractive index percentage is negative, and the region is referred as a trench region.

Term"down doping" as used herein refers to adding doping materials to facilitate decrease in the refractive index of a particular layer or part of optical fiber. The materials conFig.ured to facilitate down-doping are known as down-dopants such as Fluorine. The down doping is done to form a low RI region i.e., trench region.

Term"up doping" as used herein refers to adding doping materials to facilitate increase in the refractive index of a particular layer or part of optical fiber. The materials conFig.ured to facilitate up-doping are known as up-dopants such as Germanium, Chlorine.

Term"un doped" or "unintentionally doped" as used herein refers to a region of the optical fiber that contains a dopant not intentionally added to the region during fabrication, but Termdoes not exclude low levels of background doping that may be inherently incorporated during the fabrication process. Such background doping levels are low in that they have an insignificant effect on the refractive index of the undoped region.

Term"multicore fiber" as used herein refers to an optical fiber having multiple core regions, each capable of communicating light signals between transceivers including transmitters and receivers which may allow for parallel processing of multiple signals. The multicore fiber may be used for wavelength division multiplexing (WDM) or multi-level logic or for other parallel optics of spatial division multiplexing. The multicore fiber may advantageously be aligned with and connected to various devices in a manner that allows for easy and reliable connection so that the plurality of core regions are aligned accurately at opposite terminal ends with like communication paths in connecting devices.

Term"heterogeneous multicore fiber" as used herein refers to a multicore fiber having a different RI profile of the core. When the RI profile of two cores are different, this means both the cores have different propagation constant, and because of different propagation constant there is a phase mismatch between the two cores i.e., $\Delta\beta \neq 0$ which leads to reduction in cross talk between the two cores. In a straight fiber, heterogeneous multicore fiber achieves less crosstalk (XT) as compared to the known homogeneous multicore fiber known in the art.

Term"pitch" as used herein refers to a core to core spacing between adjacent cores in a multicore fiber. In other words, pitch is defined as a distance between the central point of two nearest cores.

Term"pitch to diameter ratio" as used herein refers to a ratio of distance between two core and the clad diameter (i.e., the glass diameter) of the optical fiber is defined as pitch to diameter ratio. The pitch to diameter ratio is utmost important in multicore fiber because of a greater number of core regions, the cross talk between cores increases if the multicore fiber has not been optimally designed.

Term"crosstalk" as used herein refers to a major impairment of optical communication networks utilizing WDM transmission. Crosstalk in optical networks occurs when the optical power associated with one channel starts appearing in another channel or adjacent channel. In MCF, the crosstalk arises from unwanted coupling between the multiple cores.

Term"predefined lattice" as used herein refers to a polynomial having four or more than four sides. The predefined lattice can also be a circular lattice.

Term"trench assisted core region" as used herein is a core region immediately surrounded by a trench region is defined as trench assisted core region. In other words, the trench region is disposed adjacent to the core region. The trench assisted core region is formed by manufacturing a trenched core rod while preparing a multicore glass preform assembly. The trenched core rod comprises an up-doped region and a down-doped region surrounding the up-doped region.

Term"non-trenched core region" as used herein refers to a core region that is only doped with an up dopant and there is no low refractive index region or trench region surrounding the core region. The non-trenched core region is formed by manufacturing a core rod while preparing a multicore glass preform assembly. The core rod comprises an up-doped region and a pure silica region surrounding the up-doped region. Further, the pure silica region of the core rod gets fused with pure silica cladding which makes the non-trenched core region free from the trench region as well as buffer region.

Term"buffer region" as used herein refers to a region having low width which is un doped (i.e., pure silica). The radial thickness of the buffer region is less than 0.5 $\mu$m. The buffer region is not an intentional un doped region between the up doped core region and the trench region. The tolerance value of the buffer region is less than 0.5 $\mu$m which may develop around the core region because of uncontrolled process parameters. In an ideal scenario, the width of the buffer region is zero.

Term"leakage loss" as used herein refers to loss due to mode leak in an optical fiber that adds to an attenuation of the optical fiber. The leakage loss is calculated using finite element analysis method where the losses are calculated in the fiber in straight condition. In multicore fiber, leakage loss is very critical for the outer cores which are near to the outer cladding interface.

Term"glass diameter of the optical fiber" as used herein refers to a diameter of a bare fiber that is an uncoated fiber drawn by melting a glass preform in a draw tower. Further, the bare fiber is coated with one or more coating layers (i.e., a primary coating layer and/or a secondary coating layer).

Term"mode field diameter (MFD)" as used herein refers to the diameter of the spread of electric field distribution in propagation mode (light path). Light usually passes through the core region. However, in the case of a single-mode optical fiber, the light leaks into the cladding region. Therefore, single-mode optical fibers are specified by MFD rather than core diameter. MFD is slightly greater than the core diameter. Each core of the multicore fiber exhibits the property of single mode fiber.

Term"cable cut off wavelength" as used herein refers to a parameter of single-mode optical fibers. An optical fiber cannot be a single-mode fiber if it is used at a wavelength shorter than the cable cut-off wavelength, which is determined by optical fiber structure, involving refraction index distribution and core diameter. Each core of the multicore fiber exhibits the property of single mode fiber.

Term"macro bend loss" as used herein refers to losses induced in bends around mandrels (or corners in installations), generally more at the cable level or for fibers. The macro bend loss occurs when the fiber cable is subjected to a significant amount of bending above a critical value of curvature. The macro bend loss is also called large radius loss. Each core of the multicore fiber exhibits the property of single mode fiber.

Term"micro bend loss" as used herein refers to a loss in an optical fiber that relates to a light signal loss associated with lateral stresses along a length of the optical fiber. The micro bend loss is due to coupling from the optical fiber's guided fundamental mode to lossy modes or cladding modes. Each core of the multicore fiber exhibits the property of single mode fiber.

Term"core multiplication factor" as used herein refers to a Total effective area of

$$\text{cores/Area of cladding}$$

$$= N \times (Aeff/(\pi*(CD/2)^2)$$

Where N = no. of cores in the multicore fiber.
Aeff = effective mode area in one core
CD = cladding diameter.

Term"effective refractive index (RI)" as used herein refers to a ratio between the propagation constant in the optical fiber along the propagation direction and the propagation constant in vacuum.

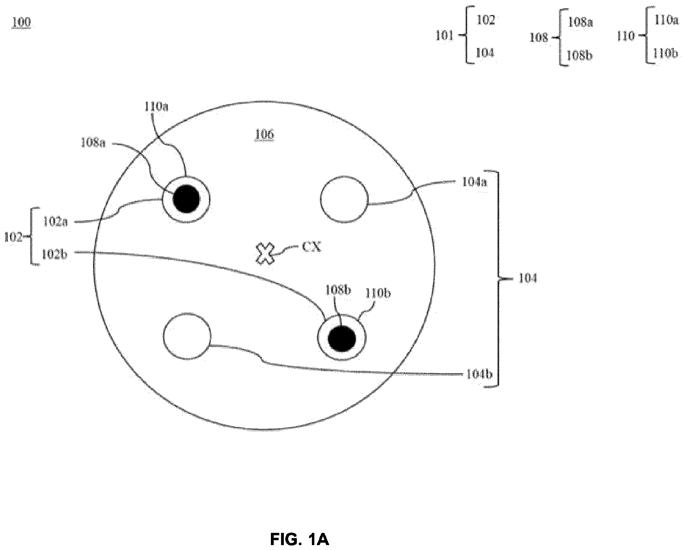

FIG. 1A is a pictorial snapshot illustrating a cross-sectional view of a multicore fiber 100. The multicore fiber 100 may be a cost-effective and a compact multi-core fiber having reduced crosstalk, better confinement in a core region, and improved waveguide parameters. In particular, the multicore fiber 100 may have a cable cut off wavelength of less than or equal to 1260 nanometers (nm). Moreover, the multicore fiber 100 may have a mode field diameter in a range of 7.5 to 9.5 micrometres ($\mu$m) at 1310 nm wavelength. Further, the multicore fiber 100 may have a crosstalk of less than -25 decibel (dB)/ 10 Kilometres (Km).

In accordance with an embodiment of the present disclosure, the multicore fiber 100 may have a plurality of core regions 101. In particular, the plurality of core regions 101 may have a plurality of trench assisted core regions 102 of which first and second trench assisted core regions 102a and 102b are shown. Moreover, the multicore fiber 100 may have a plurality of non-trenched core regions 104 of which first and second non-trenched core regions 104a and 104b are shown. Further, the multicore fiber 100 may have a cladding region 106 adapted to envelop an outer circumferential surface of the plurality of trench assisted core regions 102 and the plurality of non-trenched core regions 104.

In accordance with an embodiment of the present disclosure, the multicore fiber 100 may have a core multiplication factor that is in a range of 0.01 to 0.045. The core multiplication factor may be defined as a ratio of area occupied by the plurality of core regions 101 inside the cladding region 106 and area of the cladding region 106. Particularly, the core multiplication factor indicates the maximum number of cores 102 and 104 that may be disposed in the cladding region 106. The core multiplication factor may be designed in the disclosed range of the present disclosure to achieve improved crosstalk along with high density of cores in the multicore fiber 100.

In accordance with an embodiment of the present disclosure, the cladding region 106 may be made up of a material such as, but not limited to, plastic, glass, and the like. Aspects of the present disclosure are intended to include and/or otherwise cover any type of the material for the cladding, known to a person having ordinary skill in the art, without deviating from the scope of the present disclosure. In particular, the cladding 106 may have an associated refractive index that may be smaller than the refractive index of each of the plurality of trench assisted core regions 102 and each of the plurality of non-trenched core regions 104. Futher, when the refractive index of each the plurality of trench assisted core regions 102 and the each of the plurality of non-trenched core regions 104 is $n_{core}$ and the refractive index of the cladding 106 is $n_{clad}$, then $n_{core}$ is greater than $n_{clad}$.

In accordance with an embodiment of the present disclosure, the multicore fiber 100 may have a central axis CX such that the plurality of trench assisted core regions 102 and the plurality of non-trenched core regions 104 may be arranged along the central axis CX running longitudinally, *i.e.,* generally parallel to the central axis CX. Further, the multicore fiber 100 may be designed to employ space division multiplexing (SDM) technique to transmit a plurality of optical signals through the plurality of trench assisted core regions 102 and the plurality of non-trenched core regions 104 simultaneously.

The plurality of trench assisted core regions 102 and the plurality of non-trenched core regions 104 may be arranged in a predefined lattice on a cross-section of the multicore fiber 100 that is perpendicular to an axis extending parallelly along the central axis CX of the multicore fiber 100. In accordance with an embodiment of the present disclosure, the predefined lattice is a square lattice. Alternatively, the predefined lattice may be one of a pentagonal or hexagonal lattice. It will be apparent to a person skilled in the art that the plurality of trench assisted core regions 102 and the plurality of non-trenched core regions 104 are shown to be arranged in the square lattice to make the illustrations concise and clear and should not be considered as a limitation of the present disclosure. In various alternate aspects, the plurality of trench assisted core regions 102 and the plurality of non-trenched core regions 104 may be arranged in any type of the predefined lattice, without deviating from the scope of the present disclosure.

In accordance with an embodiment of the present disclosure, the plurality of trench assisted core regions 102 and the plurality of non-trenched core regions 104 may be arranged in an alternate arrangement in the predefined lattice such that each trench assisted core region of the plurality of trench assisted core regions 102 has at least two adjacent non-trenched core regions of the plurality of non-trenched core regions 104, and vice versa.

In accordance with an embodiment of the present disclosure, the plurality of trench assisted core regions 102 and the plurality of non-trenched core regions 104 may be arranged alternatively when the plurality of trench-assisted core regions 102 and the plurality of non-trenched core regions 104 are arranged at a first predefined radial distance from a centre of the multicore fiber 100.

In accordance with an embodiment of the present disclosure, the first predefined radial distance from the centre of the multicore fiber 100 may be in a range of 22.5 $\mu$m to 37.5 $\mu$m. In particular, the first predefined radial distance may be a distance between the central axis CX of the multicore fiber 100 and a center of each core of the plurality of core regions 101. Further, the first predefined radial distance may be selected in the above disclosed range so that the multicore fiber 100 may have enough outer clad thickness (OCT) to avoid leakage loss in the multicore fiber 100.

In accordance with an embodiment of the present disclosure, the plurality of trench assisted core regions 102 in the plurality of core regions 101 may be in a range of 40% to 60%. In particular, the plurality of trench assisted core regions 102 may be in a range of 40% to 60% of a total number of the plurality of core regions 101 in the multicore fiber 100.

In accordance with an embodiment of the present disclosure, the total number of the plurality of core regions 101 may be a summation of the plurality of trench assisted core regions 102 and the plurality of non-trenched core regions 104 in the multicore fiber 100. Further, the plurality of trench assisted core regions 102 is two and the plurality of non-trenched core regions 104 is two, therefore, the total number of the plurality of core regions 101 in the multicore fiber 100 is four.

Although FIG. 1A is a pictorial snapshot illustrating that the total number of the plurality of core regions 101 is four (*i.e.,* two of the plurality of trench assisted core regions 102 and two of the plurality of non-trenched core regions 104), it will be apparent to a person skilled in the art that the scope of the present disclosure is not limited to it. In various other aspects, the total number of the plurality of core regions 101 may have any number of the plurality of trench assisted core regions 102 and the plurality of non-trenched core regions 104 such that a number of the plurality of trench assisted core regions 102 is in a range of 40% to 60% of the total number of the plurality of core regions 101, without deviating from the scope of the present disclosure.

In accordance with an embodiment of the present disclosure, the multicore fiber 100 may have a glass diameter less than or equal to 125 + 0.7 $\mu$m.

In accordance with an embodiment of the present disclosure, the multicore fiber 100 may have a pitch to the glass diameter ratio in a range of 0.24 to 0.36. The pitch to glass diameter ratio may be selectively chosen to maintain enough distance between the plurality of core regions 101 along with reducing the crosstalk between the plurality of core regions 101 in a reduced glass diameter multicore fiber 100. If the distance between cores are increased significantly to reduce the crosstalk, it leads to significant increase the glass diameter of the multicore fiber that decreases the packing density and packing efficiency if a cable that will enclose plurality of multicore fiber 100.

In accordance with an embodiment of the present disclosure, a pair of adjacent trench assisted core region and a non-trenched core region of the plurality core regions 101 may have a phase difference there between such that a numerical value of the phase difference is non-zero. Further, a pair of adjacent trench assisted core region 102a and non-trenched core region 104a may have a phase difference there between such that a numerical value of the phase difference is non-zero. The non-zero phase difference may result in significant reduction of crosstalk between the adjacent cores. The pair of adjacent core regions (*i.e.,* nearest core regions) have non-zero phase difference because the refractive index profile of the adjacent core regions are different which leads to different propagation constant of the adjacent core regions.

In accordance with an embodiment of the present disclosure, the plurality of trench assisted core regions 102 and the plurality of non-trenched core regions 104 may have different propagation constants.

In accordance with an embodiment of the present disclosure, the pair of adjacent trench assisted core region and a non-trenched core region of the plurality core regions 101 may have different propagation constants For example the pair of adjacent trench assisted core region 102a and non-trenched core region 104a may have different propagation constants. The different propagation constants between the pair of adjacent core regions lead to phase mismatch between the pair of adjacent core regions which reduces the interference of signals between the pair of adjacent core regions.

In accordance with an embodiment of the present disclosure, each of the plurality of trench assisted core regions 102 and each of the plurality of non-trenched core regions 104 may have effective refractive indexes, respectively, such that a difference between the effective refractive indexes of a pair of a trench assisted core region of the plurality of trench assisted core regions 102 and a non-trenched core region of the plurality of non-trenched core regions 104 is not equal to zero.

In accordance with an embodiment of the present disclosure, each of the trench assisted core regions 102 may have a first diameter and each of the non-trenched core regions 104 may have a second diameter such that the first diameter is equal to the second diameter. Alternatively, the first diameter is greater than second diameter.

In accordance with an embodiment of the present disclosure, the manufacturing process of the multicore fiber 100 becomes easy because during preparation of a preform assembly of the multicore fiber 100, a drilling diameter of the plurality of holes for the plurality of trench assisted core regions 102 and the plurality of holes for the plurality of non-trenched core regions 104 is same. Further, the preform assembly may be collapsed to form a multicore glass preform which is further drawn to obtain the multicore fiber 100. The up doped regions of both the plurality of trench assisted core regions 102 and the plurality of non-trenched core regions are approximately equal in diameter such that instead of the trench region, the adjacent region of non-trenched core regions 104 is made up of pure silica (un doped region) which significantly helps in reducing the cost of the multicore fiber 100.

In accordance with an embodiment of the present disclosure, the plurality of non-trenched core regions 104 may have a first maximum refractive index ($n_{1max}$) and the plurality of trench assisted core regions 102 may have a second maximum refractive index ($n_{2max}$) such that the first maximum refractive index ($n_{1max}$) is greater than the second maximum refractive index ($n_{2max}$). Specifically, the first maximum refractive index ($n_{1max}$) being greater than the second maximum refractive index ($n_{2max}$) may lead to $\Delta\beta$ being non-zero. Hence, a crosstalk of the multicore fiber 100 may reduce significantly as compared to the cores having same index profiles. The plurality of trench assisted core regions 102 are defined by a plurality of core regions 108 and a plurality of trench regions 110 surrounding the plurality of core regions 108, respectively, such that a radial thickness of an un-doped region between the plurality of core regions 108 and the corresponding plurality of trench regions 110 is less than 1 micrometres ($\mu$m).

In accordance with an embodiment of the present disclosure, the plurality of trench regions 110 may be disposed adjacent to the plurality of core regions 108 respectively. In some aspects of the present disclosure, the plurality of trench regions 110 may be positioned immediately next to the plurality of core regions 108 respectively.

In one aspect of the present disclosure, the radial thickness of the un-doped region between the plurality of core regions 108 and the corresponding plurality of trench regions 110 of the trench-assisted core regions 102 is less than or equal to 0.5 $\mu$m. Particularly, the first and second trench assisted core regions 102a and 102b are defined by first and second core regions 108a and 108b of the plurality of core regions 108 and first and second trench regions 110a and 110b of the plurality of trench regions 110 such that the first and second trench regions 110a and 110b are disposed adjacent to the first and second core regions 108a and 108b, respectively, and a radial thickness of an un-doped region between the first core region 108a and the first trench region 110a and a radial thickness of an un-doped region between the second core region 108b and the second trench region 110b is less than 1 $\mu$m. In other words, the plurality of trench regions 110 in the plurality of trench assisted core regions 102 may be disposed immediate to the up-doped region (i.e., the plurality of core regions 108) of the plurality of trench assisted core regions 102 such that there is no buffer region (i.e., the un-doped region having the radial thickness of less than 1 $\mu$m) between the plurality of trench regions 110 and the plurality of core regions 108 (i.e., the up doped regions).

In accordance with an embodiment of the present disclosure, the plurality of trench assisted core regions 102 may be independent of pure silica regions that is generally formed between a core region and a down doped region (i.e., a trench region). The pure silica region (i.e., buffer clad region) can increase the manufacturing cost and can make the fiber manufacturing process tedious and time taking. The intentionally introduced buffer region (i.e., pure silica region having width greater than 1 $\mu$m between the up doped core region 108 and the down doped region may alter the waveguide parameters of the multicore fiber 100. As, the plurality of trench assisted core regions 102 does not have any buffer region and/or undoped region adjacent to the core region, the manufacturing of multicore fiber 100 is less complex while achieving the required waveguide properties along with effectively controlling crosstalk between the cores. Moreover, the absence of the buffer cladding between the core region and the trench region (*e.g.*, between the first core region 108a and the first trench region 110a) provides better light confinement in the core regions. The absence of buffer clad region does not avoid of the possibilities of very thin buffer region between the core regions and the trench regions which is formed because of uncontrolled process parameters during transitioning phase from the up doped core region to the down doped trench region. Further, as discussed, an interface of the first core region 108a and the first trench region 110a may have a thin buffer region of radial thickness less than 1 $\mu$m (which is not intentionally designed while designing the multicore fiber 100). The thin buffer region is not comparable to the intentionally designed buffer clad between the up doped and core region and the down doped trench region. The thin buffer region of very low radial thickness may or may not be present between the first core region 108a and the first trench region 110a.

In accordance with an embodiment of the present disclosure, the removal of buffer region between the core and the trench (*e.g.*, the first core region 108a and the first trench region 110a) is extremely important for better confinement of light in the cores, reducing the manufacturing cost of the cores, reducing the manufacturing time and process steps while manufacturing the trench assisted core rods, t which is extremely important while designing high density core structure in multicore fiber.

In accordance with an embodiment of the present disclosure, the high-density core structure means a greater number of cores can be accommodated in a 125 $\mu$m cladding diameter without comprising the leakage loss and crosstalk of the multicore fiber 100. The positioning of buffer region between the core region and the trench region in the multicore fiber 100 where the plurality of trench assisted cores 102 and the plurality of non-trenched core regions 104 may be arranged in an alternate structure leads to increment of cost of the multicore fiber 100 as well as compromises core multiplication factor of the multicore fiber 100. The buffer region between the core region and the trench region in the multicore fiber 100 degrades the waveguide parameters such as crosstalk, MFD, bend loss performance as the confinement of the core region is not good.

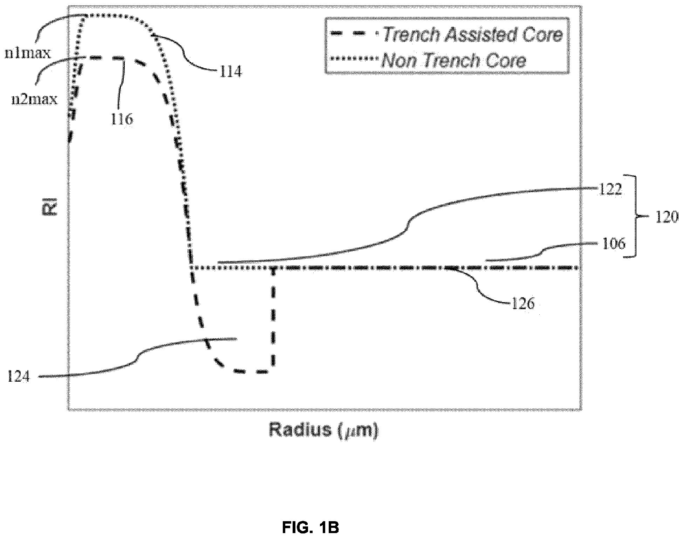

FIG. 1B is a pictorial snapshot illustrating a graph 112 representing a Refractive Index (RI) profile comparison of a trench assisted core region of the plurality of trench assisted core regions 102 (as shown in FIG. 1A) and a non-trenched core region of the plurality of non-trenched core regions 104 (as shown in FIG. 1A) disposed in the cladding region 106 (as shown in FIG. 1A) of the multicore fiber 100 (as shown in FIG. 1A).

The graph 112 is a radius versus relative refractive index graph such that an x-axis of the graph 112 represents values of the radius and a y-axis of the graph 112 represents values of a relative refractive index of non-trenched core region of the plurality of non-trenched core regions 104 and a relative refractive index of a trench assisted core region of the plurality of trench assisted core regions 102. In particular, the graph 112 has a curve 114 that represent the RI profile of a non-trenched core region and the cladding region 106 of the multicore fiber 100. Further, the graph 112 has a curve 116 that represent the RI profile of trench assisted core region and the cladding region 106 of the multicore fiber 100.

As illustrated by the curve 114, the relative refractive index of the non-trenched core region has a maximum value that is given by the first maximum refractive index ($n_{1max}$). Further, the curve 114 transitions from the non-trenched core region to the cladding region 106, thus generating the RI profile that is defined by the first maximum refractive index ($n_{1max}$) and a first flat region 120. Specifically, the first flat region 120 has a pure silica region 122 of the plurality of non-trenched core regions 104 and the cladding region 106. Furthermore, the cladding region 106 may be un doped such that the curve 114 has a second flat region 126.

Similarly, as illustrated by the curve 116, the relative refractive index of the trench assisted core region has a maximum value that is given by the second maximum refractive index ($n_{2max}$). Further, the curve 116 transitions from of the plurality of trench assisted core regions 102 to the cladding region 106, thus generating the RI profile that is defined by the second maximum refractive index ($n_{2max}$), a trench region 124 and the second flat region 126. The difference between the maximum refractive index of the trench assisted core region and non-trenched core region may reduce the crosstalk between the trench assisted core region and the non-trenched core region so that the multicore fiber 100 can achieve low crosstalk, high MFD range without the need of forming trench around each core region of the plurality of core regions 101.

In accordance with an embodiment of the present disclosure, the difference between effective refractive index of the trench assisted core region of the plurality of trench assisted core regions 102 and a non-trenched core regions of the plurality of non-trenched core regions 104 is not equal to zero. The non-zero difference between effective refractive indexes will lead to phase mismatch between the trench assisted core region and non-trenched core region which improves the crosstalk performance of the multicore fiber 100.

In first exemplary aspect of the present disclosure, in the multicore fiber 100, each trench assisted core region of the plurality of trench assisted core regions 102 may have a core delta ($\Delta_C$) value (*i.e.,* a relative refractive index difference between each core regions 102 and the cladding region 106) of 0.45. In particular, each trench assisted core region of the plurality of trench assisted core regions 102 may have a core radius of 4.5 micro-

metres ($\mu$m). Moreover, each trench assisted core region of the plurality of trench assisted core regions 102 may have a core alpha ($\alpha_C$) value of 7. Further, each trench region 110 of the plurality of trench assisted core regions 102 may have a trench delta ($\Delta_T$) value (i.e., a relative refractive index difference between a trench of a trench assisted core region of the plurality of trench assisted core regions 102 and the cladding region 106) of -0.25. Furthermore, each trench region 110 of the plurality of trench assisted core regions 102 may have a trench radius of 12 micrometres ($\mu$m).

Each trench region 110 of the plurality of trench assisted core regions 102 may have a trench alpha ($\alpha_T$) value of 6.

In accordance with an embodiment of the present disclosure, at a wavelength of 1310 nanometers (nm), each trench assisted core region of the plurality of trench assisted core regions 102 may have a Mode Field Diameter (MFD) of 8.65 $\mu$m.

In accordance with an embodiment of the present disclosure, at a wavelength of 1550 nm, each trench assisted core region of the plurality of trench assisted core regions 102 may have a MFD of 9.26 $\mu$m.

In accordance with an embodiment of the present disclosure, each trench assisted core region of the plurality of trench assisted core regions 102 may have a Zero-Dispersion Wavelength (ZDW) of 1313 nm.

In accordance with an embodiment of the present disclosure, each trench assisted core region of the plurality of trench assisted core regions 102 may have a Cable Cut-off of 1100 nm.

In the first exemplary aspect of the present disclosure, in the multicore fiber 100, each non-trenched core region of the plurality of non-trenched core regions 104 may have a core delta ($\Delta_C$) value (i.e., a relative refractive index difference between a non-trenched core region of the plurality of non-trenched core regions 104 and the cladding region 106) of 0.55. In particular, each non-trenched core region of the plurality of non-trenched core regions 104 may have a core radius of 4.5 $\mu$m. Moreover, each non-trenched core region of the plurality of non-trenched core regions 104 may have a core alpha ($\alpha_C$) value of 7. Further, at a wavelength of 1310 nanometers (nm), each non-trenched core region of the plurality of non-trenched core regions 104 may have a MFD of 8.64 $\mu$m.

In accordance with an embodiment of the present disclosure, at a wavelength of 1550 nm, each non-trenched core region of the plurality of non-trenched core regions 104 may have a MFD of 9.35 $\mu$m.

In accordance with an embodiment of the present disclosure, each non-trenched core region of the plurality of non-trenched core regions 104 may have a ZDW of 1312 nm.

In accordance with an embodiment of the present disclosure, each non-trenched core region of the plurality of non-trenched core regions 104 may have a Cable Cut-off of 1175 nm.

In accordance with an embodiment of the present disclosure, the cladding region 106 may have a radius of 62.5 $\mu$m.

In accordance with an embodiment of the present disclosure, the cladding region 106 may have a delta ($\Delta$) of 0. Specifically, in above stated configuration, the multicore fiber 100 may have a pitch of 40 $\mu$m, an OCT of 34.2 $\mu$m, and a cross talk of -49 Decibel/10 Kilometres (dB/10 km).

In second exemplary aspect of the present disclosure, in the multicore fiber 100, each trench assisted core region of the plurality of trench assisted core regions 102 may have a core delta ($\Delta_C$) value of 0.61. In particular, each trench assisted core region of the plurality of trench assisted core regions 102 may have a core radius of 4.6 micrometres ($\mu$m). Moreover, each trench assisted core region of the plurality of trench assisted core regions 102 may have a core alpha ($\alpha_C$) value of 7. Further, each trench region 110 of the plurality of trench assisted core regions 102 may have a trench delta ($\Delta_T$) value of -0.3.

In accordance with an embodiment of the present disclosure,, each trench region 110 of the plurality of trench assisted core regions 102 may have a trench radius of 12 $\mu$m. And, each trench region 110 of the plurality of trench assisted core regions 102 may have a trench alpha ($\alpha_T$) value of 6. In accordance with an embodiment of the present disclosure, at a wavelength of 1310 nanometers (nm), each trench assisted core region of the plurality of trench assisted core regions 102 may have a Mode Field Diameter (MFD) of 8.44 $\mu$m.

In accordance with an embodiment of the present disclosure, at a wavelength of 1550 nm, each trench assisted core region of the plurality of trench assisted core regions 102 may have a MFD of 9.07 $\mu$m.

In accordance with an embodiment of the present disclosure, each trench assisted core region of the plurality of trench assisted core regions 102 may have a ZDW of 1310 nm

In accordance with an embodiment of the present disclosure, each trench assisted core region of the plurality of trench assisted core regions 102 may have a Cable Cut-off of 1224 nm.

In the third exemplary aspect of the present disclosure, in the multicore fiber 100, each non-trenched core region of the plurality of non-trenched core regions 104 may have a core delta ($\Delta_C$) value of 0.65. In particular, each non-trenched core region of the plurality of non-trenched core regions 104 may have a core radius of 4.6 $\mu$m. Moreover, each non-trenched core region of the plurality of non-trenched core regions 104 may have a core alpha ($\alpha_C$) value of 7. Further, at a wavelength of 1310 nanometers (nm), each non-trenched core region of the plurality of non-trenched core regions 104 may have a MFD of 8.65 $\mu$m.

In accordance with an embodiment of the present disclosure, at a wavelength of 1550 nm, each non-trenched core region of the plurality of non-trenched core regions 104 may have a MFD of 9.3 $\mu$m.

In accordance with an embodiment of the present disclosure, each non-trenched core region of the plurality of non-trenched core regions 104 may have a ZDW of 1309 nm.

In accordance with an embodiment of the present disclosure, each non-trenched core region of the plurality of non-trenched core regions 104 may have a Cable Cut-off of 1235 nm.

In accordance with an embodiment of the present disclosure, the cladding region 106 may have a radius of 62.5 $\mu$m.

In accordance with an embodiment of the present disclosure, the cladding region 106 may have a delta ($\Delta$) of -0.02. Specifically, in above stated configuration, the multicore fiber 100 may have a pitch of 40 $\mu$m, an OCT of 34.2 $\mu$m, and a cross talk of -55 Decibel/10 Kilometres (dB/10 km).

In fourth exemplary aspect of the present disclosure, in the multicore fiber 100, each trench assisted core region of the plurality of trench assisted core regions 102 may have a core delta ($\Delta_C$) value of 0.45. In particular, each trench assisted core region of the plurality of trench assisted core regions 102 may have a core radius of 4.85 $\mu$m. Moreover, each trench assisted core region of the plurality of trench assisted core regions 102 may have a core alpha ($\alpha_C$) value of 7. Further, each trench region 110 of the plurality of trench assisted core regions 102 may have a trench delta ($\Delta_T$) value of -0.35. Furthermore, each trench region 110 of the plurality of trench assisted core regions 102 may have a trench radius of 13 $\mu$m.

In accordance with an embodiment of the present disclosure, each trench region 110 of the plurality of trench assisted core regions 102 may have a trench alpha ($\alpha_T$) value of 5.

In accordance with an embodiment of the present disclosure, at a wavelength of 1310 nm, each trench assisted core region of the plurality of trench assisted core regions 102 may have a MFD of 9.01 $\mu$m.

In accordance with an embodiment of the present disclosure, at a wavelength of 1550 nm, each trench assisted core region of the plurality of trench assisted core regions 102 may have a MFD of 9.55 $\mu$m.

In accordance with an embodiment of the present disclosure, each trench assisted core region of the plurality of trench assisted core regions 102 may have a ZDW of 1315 nm. Furthermore, each trench assisted core region of the plurality of trench assisted core regions 102 may have a Cable Cut-off of 1150 nm.

In the fifth exemplary aspect of the present disclosure, in the multicore fiber 100, each non-trenched core region of the plurality of non-trenched core regions 104 may have a core delta ($\Delta_C$) value of 0.5. Moreover, each non-trenched core region of the plurality of non-trenched core regions 104 may have a core radius of 4.85 $\mu$m. Furthermore, each non-trenched core region of the plurality of non-trenched core regions 104 may have a core alpha ($\alpha_C$) value of 6.

In accordance with an embodiment of the present disclosure, at a wavelength of 1310 nanometers (nm), each non-trenched core region of the plurality of non-trenched core regions 104 may have a MFD of 9.15 $\mu$m.

In accordance with an embodiment of the present disclosure, at a wavelength of 1550 nm, each non-trenched core region of the plurality of non-trenched core regions 104 may have a MFD of 9.8 $\mu$m.

In accordance with an embodiment of the present disclosure, each non-trenched core region of the plurality of non-trenched core regions 104 may have a ZDW of 1312 nm. Furthermore, each non-trenched core region of the plurality of non-trenched core regions 104 may have a Cable Cut-off of 1230 nm.

In accordance with an embodiment of the present disclosure, the cladding region 106 may have a radius of 62.5 $\mu$m. In particular, the cladding region 106 may have a delta ($\Delta$) of 0.02. Specifically, in above stated configuration, the multicore fiber 100 may have a pitch 40 $\mu$m, an OCT 34.2 $\mu$m, and a cross talk of -39 Decibel/10 Kilometres (dB/10 km).

In sixth exemplary aspect of the present disclosure, in the multicore fiber 100, each trench assisted core region of the plurality of trench assisted core regions 102 may have a core delta ($\Delta$) value of 0.61. In particular, each trench assisted core region of the plurality of trench assisted core regions 102 may have a core radius of 4.6 $\mu$m. Moreover, each trench assisted core region of the plurality of trench assisted core regions 102 may have a core alpha ($\alpha_C$) value of 7. Further, each trench region 110 of the plurality of trench assisted core regions 102 may have a trench delta ($\Delta_T$) value of -0.3. Furthermore, each trench region 110 of the plurality of trench assisted core regions 102 may have a trench radius of 12 $\mu$m.

In accordance with an embodiment of the present disclosure, each trench region 110 of the plurality of trench assisted core regions 102 may have a trench alpha ($\alpha_T$) value of 6.

In accordance with an embodiment of the present disclosure, at a wavelength of 1310 nm, each trench assisted core region of the plurality of trench assisted core regions 102 may have a MFD of 8.44 $\mu$m.

In accordance with an embodiment of the present disclosure, at a wavelength of 1550 nm, each trench assisted core region of the plurality of trench assisted core regions 102 may have a MFD of 9.07 $\mu$m. Further, each trench assisted core region of the plurality of trench assisted core regions 102 may have a ZDW of 1310 nm. Furthermore, each trench assisted core region of the plurality of trench assisted core regions 102 may have a Cable Cut-off of 1224 nm.

In the seventh exemplary aspect of the present disclosure, in the multicore fiber 100, each non-trenched core region of the plurality of non-trenched core regions 104 may have a core delta ($\Delta_C$) value of 0.65. Each non-trenched core region of the plurality of non-trenched core regions 104 may have a core radius of 4.6 $\mu$m. Moreover, each non-trenched core region of the plurality of non-trenched core regions 104 may have a core alpha ($\alpha_C$) value of 7. Further, at a wavelength of 1310 nanometers (nm), each non-trenched core region of the plurality of non-trenched core regions 104 may have a MFD of 8.65 $\mu$m. Furthermore, at a wavelength of 1550 nm, each non-trenched core region of the plurality of non-trenched core regions 104 may have a MFD of 9.3 $\mu$m.

In accordance with an embodiment of the present disclosure, each non-trenched core region of the plurality of non-trenched core regions 104 may have a ZDW of 1309 nm.

In accordance with an embodiment of the present disclosure, each non-trenched core region of the plurality of non-trenched core regions 104 may have a Cable Cut-off of 1235 nm.

In accordance with an embodiment of the present disclosure, the cladding region 106 may have a radius of 62.5 $\mu$m. And, the cladding region 106 may have a delta ($\Delta$) of 0. Specifically, in above stated configuration, the multicore fiber 100 may have pitch of 35 $\mu$m, an OCT of 37.75 $\mu$m, and a cross talk of -40 Decibel/10 Kilometres (dB/10 km).

In accordance with an embodiment of the present disclosure, in the multicore fiber 100, each trench assisted core region of the plurality of trench assisted core regions 102 may have a core delta ($\Delta_C$) value in a range of 0.35 to 0.75. In particular, each trench assisted core region of the plurality of trench assisted core regions 102 may have a core radius of 3.5 $\mu$m to 5.5 $\mu$m. Moreover, each trench assisted core region of the plurality of trench assisted core regions 102 may have a core alpha ($\alpha_C$) in a range of 4 to 9. Further, each trench region of the plurality of trench assisted core regions 102 may have a trench delta ($\Delta_T$) value in a range of -0.15 to -0.7. Furthermore, each trench region 110 of the plurality of trench assisted core regions 102 may have a trench radius in a range of 10 $\mu$m to 12 $\mu$m. Subsequently, each trench region 110 of the plurality of trench assisted core regions 102 may have a trench alpha ($\alpha_T$) value in a range of 3 to 8. In accordance with an embodiment of the present disclosure, at a wavelength of 1310 nm, each trench assisted core region of the plurality of trench assisted core regions 102 may have a MFD in a range of 7.5 $\mu$m to 9.5 $\mu$m.

Further, at a wavelength of 1550 nm, each trench assisted core region of the plurality of trench assisted core regions 102 may have a MFD in a range of 8.5 $\mu$m to 10.5 $\mu$m.

Furthermore, each trench assisted core region of the plurality of trench assisted core regions 102 may have a ZDW of 1290 nm to 1350 nm. And, each trench assisted core region of the plurality of trench assisted core regions 102 may have a Cable Cut-off of less than 1260 nm.

In accordance with an embodiment of the present disclosure, each non-trenched core region of the plurality of non-trenched core regions 104 may have a core delta ($\Delta_C$) value in a range of 0.45 to 0.8. In particular, each non-trenched core region of the plurality of non-trenched core regions 104 may have a core radius in a range of 3.5 $\mu$m to 5.5 $\mu$m. Moreover, each non-trenched core region of the plurality of non-trenched core regions 104 may have a core alpha ($\alpha_C$) value in a range of 4 to 9. Further, at a wavelength of 1310 nanometers (nm), each non-trenched core region of the plurality of non-trenched core regions 104 may have a MFD in a range of 7.5 $\mu$m to 9.5 $\mu$m. Furthermore, at a wavelength of 1550 nm, each non-trenched core region of the plurality of non-trenched core regions 104 may have a MFD in a range of 8.5 $\mu$m to 10.5 $\mu$m.

In accordance with an embodiment of the present disclosure, each non-trenched core region of the plurality of non-trenched core regions 104 may have a ZDW in a range of 1290 nm to 1350 nm.

In accordance with an embodiment of the present disclosure, each non-trenched core region of the plurality of non-trenched core regions 104 may have a Cable Cut-off of less than 1260 nm.

In accordance with an embodiment of the present disclosure, the cladding region 106 may have a radius in a range of 62.5$\pm$0.35 $\mu$m. Furthermore, the cladding region 106 may have a delta ($\Delta$) in a range of -0.05 to 0.05. Specifically, in above stated configuration, the multicore fiber 100 may have pitch in a range of 30 $\mu$m to 45 $\mu$m, an OCT in a range of 25 $\mu$m to 40 $\mu$m, and a cross talk of less than -25 dB/10 km.

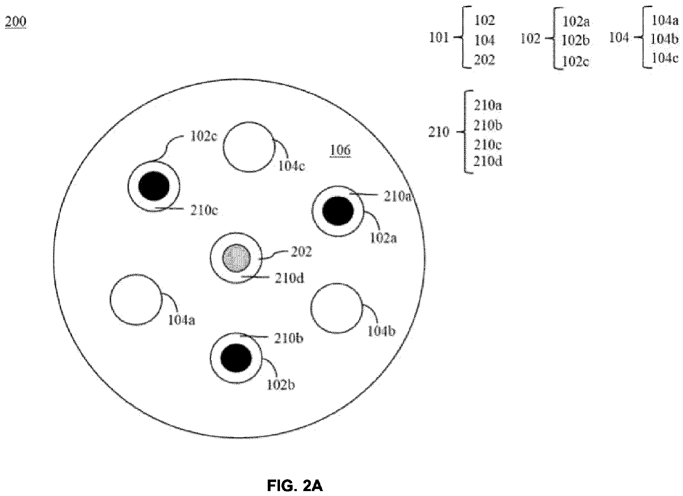

FIG. 2A is a pictorial snapshot illustrating a cross-sectional view of a multicore fiber 200. The multicore fiber 200 may be structurally and functionally similar to the multicore fiber 100. However, the plurality of core regions 101 of the multicore fiber 200 may have 7 core regions i.e., the plurality of trench assisted core regions 102, the plurality of non-trenched core regions 104, and a central core region 202. The central core region 202 may be disposed at a centre of the multicore fiber 200 along the central axis CX as shown in Fig. 1A.

In accordance with an embodiment of the present disclosure, when the central core region 202 is a trench assisted core region of the plurality of trench assisted core regions 102, the trench assisted core region may be disposed at the centre of the cladding region 106 of the multicore fiber 200. In particular, the plurality of trench assisted core regions 102 may have the central core region 202 (hereinafter interchangeably referred to and designated as "the trench assisted central core region 202"), first through third trench assisted core regions 102a-102c and the plurality of non-trenched core regions 104 may have first through third non-trenched core regions 104a-104c such that the trench assisted central core region 202 is disposed at the centre of the cladding region 106 of the multicore fiber 200.

In accordance with an embodiment of the present disclosure, each trench assisted core region 102a-c, 202 of the plurality of trench assisted core regions 102 may have a trench region 210 (210a-210d) surrounding the up doped region of each trench assisted core region 102a-102c, 202. Further, the first through third trench assisted core regions 102a-102c and the first through third non-trenched core regions 104a-104c may surround the trench assisted central core region 202.

In accordance with an embodiment of the present disclosure, the central core region 202 may be disposed in the centre of the cladding region 106 such that an effective refractive index of the central core region 202 is different than effective refractive indexes of other core regions *i.e.,* the first through third trench assisted core regions 102a-102c and the first through third non-trenched core regions 104a-104c.

In accordance with an embodiment of the present disclosure, the trench assisted central core region 202 may be defined by a third maximum refractive index $(n3_{max})$. In particular, the first through third trench assisted core regions 102a-102c may have second maximum refractive index $(n2_{max})$ such that the third maximum refractive index $(n3_{max})$ is less than the second maximum refractive index $(n2_{max})$. Moreover, the trench assisted central core region 202 may be defined by a second effective refractive index $(n2_{eff})$. Further, the first through third trench assisted core regions 102a-102c and the first through third non-trenched core regions 104a-104c may have a third effective refractive index $(n3_{eff})$ such that the second effective refractive index $(n2_{eff})$ is less than the third effective refractive index $(n3_{eff})$ of the other core regions of the multicore fiber 200 (*i.e.,* $n2_{eff} < n3_{eff}$).

In accordance with an embodiment of the present disclosure, the second effective refractive index $(n2_{eff})$ being less than the third effective refractive index $(n3_{eff})$ may lead to $\Delta\beta$ being non-zero. Hence, the crosstalk of the multicore fiber 200 may reduce. Further, the trench assisted central core 202 having an immediate trench gives better confinement and thus also help in reducing cross talk as the trench assisted central core 202 is surrounded by multiple core regions 102 and 104.

In accordance with an embodiment of the present disclosure, the trench region 210d of the trench assisted central core region 202 may have a first trench relative refractive index. In particular, each trench region 210a-210c of the first through third trench assisted core regions 102a-102c may have a second trench relative refractive index such that the first trench relative refractive index is less than the second trench relative refractive index. The difference between effective refractive index of the trench assisted central core region 202 and the trench assisted core regions 102a-102c effectively negate the interference between the all the core regions. Further, the second effective refractive index $(n2_{eff})$ is less than third effective refractive index $(n3_{eff})$ to improve the confinement of the fundamental mode in the trench-assisted central core region 202. Moreover, the second effective refractive index $(n2_{eff})$ is less than third effective refractive index $(n3_{eff})$ to improve the bend performance of the trench-assisted central core region 202 along with reducing the crosstalk. Further, the first trench relative refractive index of the trench region 210d is greater than second trench relative refractive index of the trench regions 210a-210c to obtain better confinement of mode inside the trench assisted central core region 202 and each trench assisted core regions 102 which reduces the crosstalk of the multicore fiber 100.

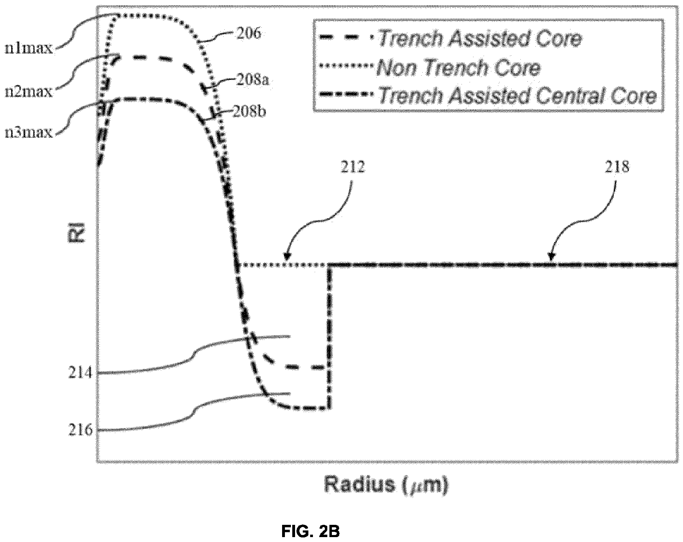

Fig. 2B is a pictorial snapshot illustrating a graph 204 representing a Refractive Index (RI) profile comparison of the plurality of trench assisted core regions 102 (as shown in FIG. 2A), the plurality of non-trenched core regions 104 (as shown in FIG. 2A), and the trench assisted central core region 202 (as shown in FIG. 2A) disposed in the cladding region 106 (as shown in FIG. 2A) of the multicore fiber 100.

The graph 204 is a radius versus relative refractive index graph such that an x-axis of the graph 204 represents values of the radius and a y-axis of the graph 204 represents values of a relative refractive index of a non-trenched core region of the plurality of non-trenched core regions 104, a relative refractive index of a trench assisted core region of the plurality of trench assisted core regions 102, and a relative refractive index of the trench assisted central core region 202. The graph 204 has a curve 206 that represent the RI profile of a non-trenched core region of the plurality of non-trenched core regions 104 and the cladding 106. Further, the graph 204 has a curve 208a that represent the RI profile of a trench assisted core region of the plurality of trench assisted core regions 102 and the cladding 106. Furthermore, the graph 204 has a curve 208b that represent the RI profile of a trench assisted central core region 202 and the cladding 106.

As shown by the curve 206, the refractive index of a non-trenched core region of the plurality of non-trenched core regions 104 has a maximum value that is given by the first maximum refractive index $(n_{1max})$. Further, the curve 206 transitions from non-trenched core region to the cladding region 106, thus generating the RI profile that is defined by the first maximum refractive index $(n_{1max})$ and a first flat region 212 and a second flat region 218. Specifically, the first flat region 212 of the plurality of non-trenched core regions 104 and the cladding region 106 have a pure silica region (*i.e.,* un doped region).

In accordance with an embodiment of the present disclosure, as illustrated by the curve 208a, the refractive index of the trench assisted core regions has a maximum value that is given by the second maximum refractive index $(n_{2max})$. In particular, the curve 208a transitions from the trench assisted core region to the cladding region 106, thus generating the RI profile that is defined by the second maximum refractive index $(n_{2max})$, a first trench region 214 and the second flat region 218. Moreover, as illustrated by the curve 208b, the refractive index of the trench assisted central core region has a maximum value that is given by the third maximum refractive index $(n_{3max})$. Further, the curve 208b transitions from the trench assisted central core region to the cladding region 106, thus generating the RI profile that is defined by the third maximum refractive index ($n_{3max}$), a second trench region 216 and the second flat region 218.

In accordance with an embodiment of the present disclosure, the first maximum refractive index ($n_{1max}$) is greater than the second maximum refractive index ($n_{2max}$) and the second maximum refractive index ($n_{2max}$) is greater than the third maximum refractive index ($n_{3max}$) (*i.e.,* $n_{1max} > n_{2max} > n_{3max}$).

If the trench assisted central core region has less refractive index as compared to the other core regions, this may lead to phase mismatch between each adjacent core regions, hence electromagnetic interference among each adjacent core will reduce.

If the trench assisted central core region has less refractive index as compared to the other core regions, the integral overlap of the fundamental modes (i.e., propagation mode) $LP_{01}$ will reduce which decrease the overall crosstalk of the multicore fiber 200.

In first exemplary aspect of the present disclosure, in the multicore fiber 200, each trench assisted core region of the plurality of trench assisted core regions 102 may have a core delta ($\Delta_C$) of 0.57. In particular, each trench assisted core region of the plurality of trench assisted core regions 102 may have a core radius of 4.5 $\mu$m. Furthermore, each trench assisted core region of the plurality of trench assisted core regions 102 may have a core alpha ($\alpha_C$) value of 7. Moreover, each trench region 210a-210c of the plurality of trench assisted core regions 102 may have a trench delta ($\Delta_T$) value of -0.25. Further, each trench region 210a-210c of the plurality of trench assisted core regions 102 may have a trench radius of 11.5 $\mu$m. Furthermore, each trench region 210a-210c of the plurality of trench assisted core regions 102 may have a trench alpha ($\alpha_T$) value of 6.

In accordance with an embodiment of the present disclosure, at a wavelength of 1310 nanometers (nm), each trench assisted core region of the plurality of trench assisted core regions 102 may have a MFD of 8.13 $\mu$m. Further, at a wavelength of 1550 nm, each trench assisted core region of the plurality of trench assisted core regions 102 may have a MFD of 8.82 $\mu$m.

In accordance with an embodiment of the present disclosure, each trench assisted core region of the plurality of trench assisted core regions 102 may have a ZDW of 1315 nm. Further, each trench assisted core region of the plurality of trench assisted core regions 102 may have a Cable Cut-off of 1210 nm.

In the second exemplary aspect of the present disclosure, in the multicore fiber 200, each non-trenched core region of the plurality of non-trenched core regions 104 may have a core delta ($\Delta_C$) value of 0.6. In particular, each non-trenched core region of the plurality of non-trenched core regions 104 may have a core radius of 4.8 $\mu$m. Furthermore, each non-trenched core region of the plurality of non-trenched core regions 104 may have a core alpha ($\alpha_C$) value of 7. Moreover, at a wavelength of 1310 nanometers (nm), each non-trenched core region of the plurality of non-trenched core regions 104 may have a MFD of 8.6 $\mu$m. Further, at a wavelength of 1550 nm, each non-trenched core region of the plurality of non-trenched core regions 104 may have a MFD of 9.2 $\mu$m. Furthermore, each non-trenched core region of the plurality of non-trenched core regions 104 may have a ZDW of 1315 nm.

In accordance with an embodiment of the present disclosure, each non-trenched core region of the plurality of non-trenched core regions 104 may have a Cable Cut-off of 1215 nm.

In the third exemplary aspect of the present disclosure, in the multicore fiber 200, the trench assisted central core region 202 may have a core delta ($\Delta_C$) of 0.55. The trench assisted central core region 202 may have a core radius of 4.5 $\mu$m, trench assisted central core region 202 may have a core alpha ($\alpha_C$) value of 7, the trench region 210d of the trench assisted central core region 202 may have a trench delta ($\Delta_T$) value of -0.3. Further, the trench region 210d of the trench assisted central core region 202 may have a trench radius of 12 $\mu$m. Furthermore, the trench region 210d of the trench assisted central core region 202 may have a trench alpha ($\alpha_T$) value of 6.

In accordance with an embodiment of the present disclosure, at a wavelength of 1310 nanometers (nm), the trench assisted central core region 202 may have a MFD of 8.2 $\mu$m.

In accordance with an embodiment of the present disclosure, at a wavelength of 1550 nm, the trench assisted central core region 202 may have a MFD of 8.9 $\mu$m. In accordance with an embodiment of the present disclosure, the trench assisted central core region 202 may have a ZDW of 1316 nm and the trench assisted central core region 202 may have a Cable Cut-off of 1218 nm.

In accordance with an embodiment of the present disclosure, the cladding region 106 may have a radius of 62.5 $\mu$m, the cladding region 106 may have a delta ($\Delta$) of 0. Specifically, in above stated configuration, the multicore fiber 200 may have a pitch of 35 $\mu$m, an OCT of 27.5 $\mu$m, a cross talk of -35 dB/10 km between the trench assisted central core region 202 and a non-trenched core region of the plurality of non-trenched core regions 104, a cross talk of -40 dB/10 km between a trench assisted core region of the plurality of trench assisted core regions 102 and a non-trenched core region of the plurality of non-trenched core regions 104, and a cross talk of -35 dB/10 km between the trench assisted central core region 202 and a trench assisted core region of the plurality of trench assisted core regions 102.

In fourth exemplary aspect of the present disclosure, in the multicore fiber 200, each trench assisted core region of the plurality of trench assisted core regions 102 may have a core delta ($\Delta_C$) of 0.58. Further, each trench assisted core region of the plurality of trench assisted core regions 102 may have a core radius of 5.2 $\mu$m. Furthermore, each trench assisted core region of the plurality of trench assisted core regions 102 may have a core alpha $(\alpha_C)$ value of 7. Furthermore, each trench region 210a-210c of the plurality of trench assisted core regions 102 may have a trench delta $(\Delta_T)$ value of -0.25. Furthermore, each trench region 210a-210c of the plurality of trench assisted core regions 102 may have a trench radius of 11.5 $\mu$m. Furthermore, each trench region 210a-210c of the plurality of trench assisted core regions 102 may have a trench alpha $(\alpha_T)$ value of 6. Furthermore, at a wavelength of 1310 nm, each trench assisted core region of the plurality of trench assisted core regions 102 may have a MFD of 9.2 $\mu$m. Furthermore, at a wavelength of 1550 nm, each trench assisted core region of the plurality of trench assisted core regions 102 may have a MFD of 9.75 $\mu$m. Furthermore, each trench assisted core region of the plurality of trench assisted core regions 102 may have a ZDW of 1317 nm. Furthermore, each trench assisted core region of the plurality of trench assisted core regions 102 may have a Cable Cut-off of 1228 nm.

In the fifth exemplary aspect of the present disclosure, in the multicore fiber 200, each non-trenched core region of the plurality of non-trenched core regions 104 may have a core delta $(\Delta_C)$ value of 0.62. Further, each non-trenched core region of the plurality of non-trenched core regions 104 may have a core radius of 5.1 $\mu$m. Furthermore, each non-trenched core region of the plurality of non-trenched core regions 104 may have a core alpha $(\alpha_C)$ value of 6. Furthermore, at a wavelength of 1310 nm, each non-trenched core region of the plurality of non-trenched core regions 104 may have a MFD of 9.1 $\mu$m. Furthermore, at a wavelength of 1550 nm, each non-trenched core region of the plurality of non-trenched core regions 104 may have a MFD of 9.7 $\mu$m. Furthermore, each non-trenched core region of the plurality of non-trenched core regions 104 may have a ZDW of 1315 nm. Furthermore, each non-trenched core region of the plurality of non-trenched core regions 104 may have a Cable Cut-off of 1230 nm.

In the sixth exemplary aspect of the present disclosure, in the multicore fiber 200, the trench assisted central core region 202 may have a core delta $(\Delta_C)$ of 0.55. Further, the trench assisted central core region 202 may have a core radius of 5 $\mu$m, the trench assisted central core region 202 may have a core alpha $(\alpha_C)$ value of 7. Furthermore, the trench region 210d of the trench assisted central core region 202 may have a trench delta $(\Delta_T)$ value of -0.3. Furthermore, the trench region 210d of the trench assisted central core region 202 may have a trench radius of 12 $\mu$m. Furthermore, the trench region 210d of the trench assisted central core region 202 may have a trench alpha $(\alpha_T)$ value of 6.

In accordance with an embodiment of the present disclosure, at a wavelength of 1310 nanometers (nm), the trench assisted central core region 202 may have a MFD of 9 $\mu$m.

In accordance with an embodiment of the present disclosure, at a wavelength of 1550 nm, the trench assisted central core region 202 may have a MFD of 9.65 $\mu$m. In accordance with an embodiment of the present disclosure, the trench assisted central core region 202 may have a ZDW of 1318 nm, the trench assisted central core region 202 may have a Cable Cut-off of 1235 nm, cladding region 106 may have a radius of 62.8 $\mu$m. Furthermore, the cladding region 106 may have a delta $(\Delta)$ of 0.04. Specifically, in above stated configuration, the multicore fiber 200 may have a pitch of 35 $\mu$m, an OCT of 27.5 $\mu$m, a cross talk of -50 dB/10 km between the trench assisted central core region 202 and a non-trenched core region of the plurality of non-trenched core regions 104, a cross talk of -45 dB/10 km between a trench assisted core region of the plurality of trench assisted core regions 102 and a non-trenched core region of the plurality of non-trenched core regions 104, and a cross talk of -42 dB/10 km between the trench assisted central core region 202 and a trench assisted core region of the plurality of trench assisted core regions 102.

In accordance with an embodiment of the present disclosure, in the multicore fiber 200, each trench assisted core region of the plurality of trench assisted core regions 102 may have a core delta $(\Delta_C)$ in a range of 0.35 to 0.75. In particular, each trench assisted core region of the plurality of trench assisted core regions 102 may have a core radius in a range of 3.5 $\mu$m to 5.5 $\mu$m. Moreover, each trench assisted core region of the plurality of trench assisted core regions 102 may have a core alpha $(\alpha_C)$ value in a range of 4 to 9. Further, each trench region 210a-210c of the plurality of trench assisted core regions 102 may have a trench delta $(\Delta_T)$ value of -0.15 to -0.7. Furthermore, each trench region 210a-210c of the plurality of trench assisted core regions 102 may have a trench radius in a range of 10 $\mu$m to 18 $\mu$m. Furthermore, each trench region 210a-210c of the plurality of trench assisted core regions 102 may have a trench alpha $(\alpha_T)$ value in a range of 3 to 8.

In accordance with an embodiment of the present disclosure, at a wavelength of 1310 nm, each trench assisted core region of the plurality of trench assisted core regions 102 may have a MFD in a range of 7.5 $\mu$m to 9.5 $\mu$m.

In accordance with an embodiment of the present disclosure, at a wavelength of 1550 nm, each trench assisted core region of the plurality of trench assisted core regions 102 may have a MFD in a range of 8.5 $\mu$m to 10.5 $\mu$m.

In accordance with an embodiment of the present disclosure, each trench assisted core region of the plurality of trench assisted core regions 102 may have a ZDW in a range of 1290 nm to 1350 nm. Additionally, each trench assisted core region of the plurality of trench assisted core regions 102 may have a Cable Cut-off of less than 1260 nm.

In accordance with an embodiment of the present disclosure, each non-trenched core region of the plurality of non-trenched core regions 104 may have a core delta $(\Delta_C)$ value in a range of 0.45 to 0.8. In particular, each non-trenched core region of the plurality of non-trenched core regions 104 may have a core radius in a range of 3.5 $\mu$m to 5.5 $\mu$m. Moreover, each non-trenched core region of the plurality of non-trenched core regions 104 may have a core alpha ($\alpha_C$) value in a range of 4 to 9. Further, at a wavelength of 1310 nm, each non-trenched core region of the plurality of non-trenched core regions 104 may have a MFD in a range of 7.5 $\mu$m to 9.5 $\mu$m. Furthermore, at a wavelength of 1550 nm, each non-trenched core region of the plurality of non-trenched core regions 104 may have a MFD in a range of 8.5 $\mu$m to 10.5 $\mu$m.

In accordance with an embodiment of the present disclosure, each non-trenched core region of the plurality of non-trenched core regions 104 may have a ZDW in a range of 1290 nm to 1350 nm. Furthermore, each non-trenched core region of the plurality of non-trenched core regions 104 may have a Cable Cut-of less than 1260 nm.

In accordance with an embodiment of the present disclosure, the trench assisted central core region 202 may have a core delta ($\Delta_C$) in a range of 0.35 to 0.75. In particular, the trench assisted central core region 202 may have a core radius in a range of 3.5 $\mu$m to 5 $\mu$m. Moreover, the trench assisted central core region 202 may have a core alpha ($\alpha_C$) value in a range of 4 to 9. Further, the trench region 210d of the trench assisted central core region 202 may have a trench delta ($\Delta_T$) value in a range of -0.15 to -0.7. Furthermore, the trench region 210d of the trench assisted central core region 202 may have a trench radius in a range of 10 $\mu$m to 18 $\mu$m.

In accordance with an embodiment of the present disclosure, the trench region 210d of the trench assisted central core region 202 may have a trench alpha ($\alpha_T$) value in a range of 3 to 8. In particular, at a wavelength of 1310 nanometers (nm), the trench assisted central core region 202 may have a MFD in a range of 7.5 $\mu$m to 9.5 $\mu$m. Further, at a wavelength of 1550 nm, the trench assisted central core region 202 may have a MFD in a range of 8.5 $\mu$m to 10.5 $\mu$m. Furthermore, the trench assisted central core region 202 may have a ZDW in a range of 1290 nm to 1350 nm.

In accordance with an embodiment of the present disclosure, the trench assisted central core region 202 may have a Cable Cut-off of less than 1260 nm.

In accordance with an embodiment of the present disclosure, the cladding region 106 may have a radius in a range of 62.5$\pm$0.35 $\mu$m. In particular, the cladding region 106 may have a delta ($\Delta$) in a range of -0.05 to 0.05. Moreover, in above stated configuration, the multicore fiber 200 may have a pitch in a range of 30 $\mu$m to 45 $\mu$m, an OCT in a range of 25 $\mu$m to 40 $\mu$m, a cross talk of less than or equal to -25 dB/10 km between the trench assisted central core region 202 and a non-trenched core region of the plurality of non-trenched core regions 104, a cross talk of less than or equal to -25 dB/10 km between a trench assisted core region of the plurality of trench assisted core regions 102 and a non-trenched core region of the plurality of non-trenched core regions 104, and a cross talk of less than or equal to -25 dB/10 km between the trench assisted central core region 202 and a trench assisted core region of the plurality of trench assisted core regions 102.

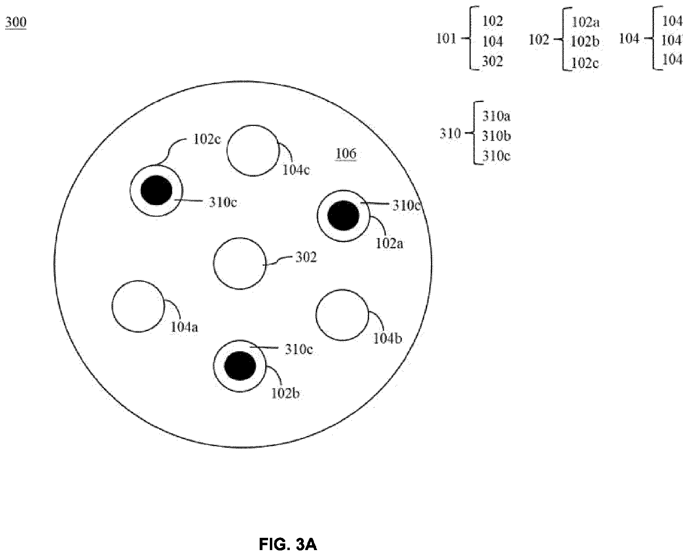

FIG. 3A is a pictorial snapshot illustrating a cross-sectional view of a multicore fiber 300. The multicore fiber 300 may be structurally and functionally similar to the multicore fiber 100 and the multicore fiber 200. However, the plurality of core regions 101 of the multicore fiber 300 may have 7 core regions *i.e.,* the plurality of trench assisted core regions 102, the plurality of non-trenched core regions 104, and a central core region 302. In particular, the central core region 302 may be disposed at a centre of the multicore fiber 300. Moreover, when the central core region 302 is a non-trenched core region of the plurality of non-trenched core regions 104, the non-trenched central core region 302 may be disposed at the centre of the cladding region 106 of the multicore fiber 300. Further, the plurality of non-trenched core regions 104 may have the central core region 302 (hereinafter interchangeably referred to and designated as "the non-trenched central core region 302"), first through third non-trenched core regions 104a-104c and the plurality of trench assisted core regions 102 may have first through third trench assisted core regions 102a-102c such that the non-trenched central core region 302 is disposed at the centre of the cladding region 106 of the multicore fiber 300. For example, each trench assisted core regions 102a-102c of the plurality of trench assisted core regions 102 may include a trench region 310a-310c surrounding an up-doped region of each trench assisted core region 102a-102c. In some aspects of the present disclosure, the non-trenched central core region 302 may be defined by a first effective refractive index ($n1_{eff}$). Further, the first through third non-trenched core regions 104a-104c and the first through third trench assisted core regions 102a-102c may be defined by the third effective refractive index ($n3_{eff}$) such that the first effective refractive index ($n1_{eff}$) is greater than the third effective refractive index ($n3_{eff}$) (*i.e.,* $n1_{eff} > n3_{eff}$). Specifically, the first effective refractive index ($n1_{eff}$) being greater than the third effective refractive index ($n3_{eff}$) may lead to $\Delta\beta$ being non-zero. Hence, the crosstalk of the multicore fiber 200 may reduce.

In accordance with an embodiment of the present disclosure, the first effective refractive index ($n1_{eff}$) is greater than third effective refractive index ($n3_{eff}$) to improve the confinement of the fundamental mode in the non-trenched central core region 302. In particular, the first effective refractive index ($n1_{eff}$) is greater than third effective refractive index ($n3_{eff}$) to improve the bend performance of the non-trenched central core region 302 along with reducing the crosstalk.

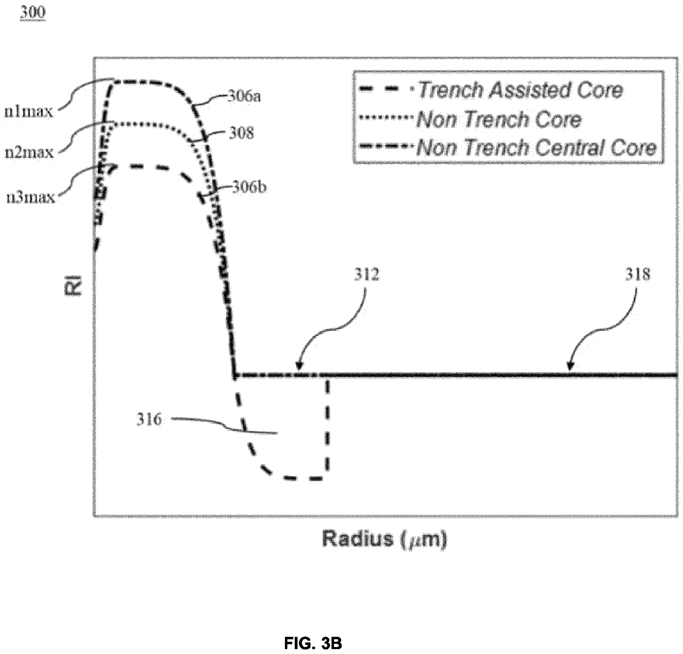

FIG. 3B is a pictorial snapshot illustrating a graph 304 representing a Refractive Index (RI) profile comparison of the plurality of trench assisted core regions 102 (as shown in FIG. 3A), the plurality of non-trenched core regions 104 (as shown in FIG. 3A), and the non-trenched central core region 302 (as shown in FIG. 3A) disposed in the cladding region 106 (as shown in FIG. 3A) of the multicore fiber 100.

The graph 304 is a radius versus relative refractive index graph such that an x-axis of the graph 304 represents values of the radius and a y-axis of the graph 304 represents values of a relative refractive index of a non-trenched core region of the plurality of non-trenched core regions 104, a relative refractive index of a trench assisted core region of the plurality of trench assisted core regions 102, and a relative refractive index of the non-trenched central core region 302.

The graph 304 has a curve 306a that represent the RI profile of a non-trenched core region of the plurality of non-trenched core regions 104 and the cladding 106. In particular, the graph 304 has a curve 308 that represent the RI profile of the trench assisted core region of the plurality of trench assisted core regions 102 and the cladding 106. Further, the graph 304 has a curve 306b that represent the RI profile of a non-trenched central core region 302 and the cladding 106.

As shown by the curve 306a, the refractive index of a non-trenched core region of the plurality of non-trenched core regions 104 has a maximum value that is given by the first maximum refractive index ($n_{1max}$). Further, the curve 306a transitions from non-trenched core region to the cladding region 106, thus generating the RI profile that is defined by the first maximum refractive index ($n_{1max}$) and a first flat region 312 and a second flat region 318. Specifically, the first flat region 312 has a pure silica region of the plurality of non-trenched core regions 104 and the second flat region 318 has a pure silica region of the cladding region 106.

Similarly, as illustrated by the curve 308, the refractive index of the trench assisted core regions has a maximum value that is given by the second maximum refractive index ($n_{2max}$). Further, the curve 308 transitions from the trench assisted core region to the cladding region 106, thus generating the RI profile that is defined by the second maximum refractive index ($n_{2max}$), a first trench region 316 and the second flat region 318.

Similarly, as illustrated by the curve 306b, the refractive index of the trench assisted central core region has a maximum value that is given by the third maximum refractive index ($n_{3max}$). Further, the curve 306b transitions from the non-trenched central core region to the cladding region 106, thus generating the RI profile that is defined by the third maximum refractive index ($n_{3max}$), the first flat region 312 and the second flat region 318. Specifically, the first maximum refractive index ($n_{1max}$) is greater than the second maximum refractive index ($n_{2max}$) and the second maximum refractive index ($n_{2max}$) is greater than the third maximum refractive index ($n_{3max}$) (*i.e.*, $n_{1max} > n_{2max} > n_{3max}$).

In accordance with an embodiment of the present disclosure, if the non-trenched central core region has high refractive index as compared to the other core regions, this may lead to phase mismatch between each adjacent core regions, hence electromagnetic interference among each adjacent core will reduce. If the trench assisted central core region has high refractive index as compared to the other core regions, the integral overlap of the fundamental modes (*i.e.*, propagation mode) $LP_{01}$ will reduce which decrease the overall crosstalk of the multicore fiber 300.

In first exemplary aspect of the present disclosure, in the multicore fiber 300, each trench assisted core region of the plurality of trench assisted core regions 102 may have a core delta ($\Delta_C$) of 0.45. In particular, each trench assisted core region of the plurality of trench assisted core regions 102 may have a core radius of 4.5 $\mu$m. Moreover, each trench assisted core region of the plurality of trench assisted core regions 102 may have a core alpha ($\alpha_C$) value of 7. Further, each trench region 310 of the plurality of trench assisted core regions 102 may have a trench delta ($\Delta_T$) value of -0.3. Furthermore, each trench region 310 of the plurality of trench assisted core regions 102 may have a trench radius of 12 $\mu$m.

In accordance with an embodiment of the present disclosure, each trench region 310 of the plurality of trench assisted core regions 102 may have a trench alpha ($\alpha_T$) value of 6. In particular, at a wavelength of 1310 nanometers (nm), each trench assisted core region of the plurality of trench assisted core regions 102 may have a MFD of 8.65 $\mu$m. Moreover, at a wavelength of 1550 nm, each trench assisted core region of the plurality of trench assisted core regions 102 may have a MFD of 9.26 $\mu$m. Further, each trench assisted core region of the plurality of trench assisted core regions 102 may have a ZDW of 1313 nm. Furthermore, each trench assisted core region of the plurality of trench assisted core regions 102 may have a Cable Cut-off of 1198 nm.

In accordance with an embodiment of the present disclosure, in the multicore fiber 300, each non-trenched core region of the plurality of non-trenched core regions 104 may have a core delta ($\Delta_C$) value of 0.6. In particular, each non-trenched core region of the plurality of non-trenched core regions 104 may have a core radius of 4.8 $\mu$m. Moreover, each non-trenched core region of the plurality of non-trenched core regions 104 may have a core alpha ($\alpha_C$) value of 7. Further, at a wavelength of 1310 nanometers (nm), each non-trenched core region of the plurality of non-trenched core regions 104 may have a MFD of 8.65 $\mu$m. Furthermore, at a wavelength of 1550 nm, each non-trenched core region of the plurality of non-trenched core regions 104 may have a MFD of 9.41 $\mu$m and each non-trenched core region of the plurality of non-trenched core regions 104 may have a ZDW of 1312 nm. Also, each non-trenched core region of the plurality of non-trenched core regions 104 may have a Cable Cut-off of 1215 nm.

In the first exemplary aspect of the present disclosure, in the multicore fiber 300, the non-trenched central core region 302 may have a core delta ($\Delta_C$) of 0.65. Further, the non-trenched central core region 302 may have a core radius of 5 $\mu$m. Furthermore, the non-trenched central core region 302 may have a core alpha ($\alpha_C$) value of 7. Furthermore, at a wavelength of 1310 nanometers (nm), the trench assisted central core region 202 may have a MFD of 8.66 $\mu$m. Furthermore, at a wavelength of 1550 nm, the trench assisted central core region 202 may have a MFD of 9.35 $\mu$m. Furthermore, the trench assisted central core region 202 may have a ZDW of 1312 nm. Furthermore, the trench assisted central core region 202 may have a Cable Cut-off of 1232 nm. Furthermore, the cladding region 106 may have a radius of 62.5 $\mu$m. Furthermore, the cladding region 106 may have a delta ($\Delta$) of 0. Specifically, in above stated configuration, the multicore fiber 200 may have a pitch of 35 $\mu$m, an OCT of 27.5 $\mu$m, a cross talk of -35 dB/10 km between the non-trenched central core region 302 and a non-trenched core region of the plurality of non-trenched core regions 104, a cross talk of -46 dB/10 km between a trench assisted core region of the plurality of trench assisted core regions 102 and a non-trenched core region of the plurality of non-trenched core regions 104, and a cross talk of -50 dB/10 km between the non-trenched central core region 302 and a trench assisted core region of the plurality of trench assisted core regions 102.

In second exemplary aspect of the present disclosure, in the multicore fiber 300, each trench assisted core region of the plurality of trench assisted core regions 102 may have a core delta ($\Delta_C$) of 0.5. Further, each trench assisted core region of the plurality of trench assisted core regions 102 may have a core radius of 4.8 $\mu$m. Furthermore, each trench assisted core region of the plurality of trench assisted core regions 102 may have a core alpha ($\alpha_C$) value of 6. Furthermore, each trench region 310 of the plurality of trench assisted core regions 102 may have a trench delta ($\Delta_T$) value of -0.25. Furthermore, each trench region 310 of the plurality of trench assisted core regions 102 may have a trench radius of 13 $\mu$m. Furthermore, each trench region 310 of the plurality of trench assisted core regions 102 may have a trench alpha ($\alpha_T$) value of 6. Furthermore, at a wavelength of 1310 nanometers (nm), each trench assisted core region of the plurality of trench assisted core regions 102 may have a MFD of 8.56 $\mu$m. Furthermore, at a wavelength of 1550 nm, each trench assisted core region of the plurality of trench assisted core regions 102 may have a MFD of 9.25 $\mu$m. Furthermore, each trench assisted core region of the plurality of trench assisted core regions 102 may have a ZDW of 1311 nm. Furthermore, each trench assisted core region of the plurality of trench assisted core regions 102 may have a Cable Cut-off of 1189 nm.

In the third exemplary aspect of the present disclosure, in the multicore fiber 300, each non-trenched core region of the plurality of non-trenched core regions 104 may have a core delta ($\Delta_C$) value of 0.55. Furthermore, each non-trenched core region of the plurality of non-trenched core regions 104 may have a core radius of 5 $\mu$m. Furthermore, each non-trenched core region of the plurality of non-trenched core regions 104 may have a core alpha ($\alpha_C$) value of 6. Furthermore, at a wavelength of 1310 nanometers (nm), each non-trenched core region of the plurality of non-trenched core regions 104 may have a MFD of 8.51 $\mu$m. Furthermore, at a wavelength of 1550 nm, each non-trenched core region of the plurality of non-trenched core regions 104 may have a MFD of 9.39 $\mu$m. Furthermore, each non-trenched core region of the plurality of non-trenched core regions 104 may have a ZDW of 11310312 nm. Furthermore, each non-trenched core region of the plurality of non-trenched core regions 104 may have a Cable Cut-off of 1208 nm.

In the fourth exemplary aspect of the present disclosure, in the multicore fiber 300, the non-trenched central core region 302 may have a core delta ($\Delta_C$) of 0.61. Further, the non-trenched central core region 302 may have a core radius of 4.8 $\mu$m. Furthermore, the non-trenched central core region 302 may have a core alpha ($\alpha_C$) value of 6. Furthermore, at a wavelength of 1310 nanometers (nm), the trench assisted central core region 202 may have a MFD of 8.58 $\mu$m. Furthermore, at a wavelength of 1550 nm, the trench assisted central core region 202 may have a MFD of 9.31 $\mu$m. Furthermore, the trench assisted central core region 202 may have a ZDW of 1306 nm. Furthermore, the trench assisted central core region 202 may have a Cable Cut-off of 1228 nm. Furthermore, the cladding region 106 may have a radius of 62.5 $\mu$m. Furthermore, the cladding region 106 may have a delta ($\Delta$) of 0. Specifically, in above stated configuration, the multicore fiber 200 may have a pitch of 35 $\mu$m, an OCT of 27.5 $\mu$m, a cross talk of -32 dB/10 km between the non-trenched central core region 302 and a non-trenched core region of the plurality of non-trenched core regions 104, a cross talk of -41 dB/10 km between a trench assisted core region of the plurality of trench assisted core regions 102 and a non-trenched core region of the plurality of non-trenched core regions 104, and a cross talk of -48 dB/10 km between the non-trenched central core region 302 and a trench assisted core region of the plurality of trench assisted core regions 102.

In accordance with an embodiment of the present disclosure, in the multicore fiber 300, each trench assisted core region of the plurality of trench assisted core regions 102 may have a core delta ($\Delta_C$) in a range of 0.35 to 0.75. Further, each trench assisted core region of the plurality of trench assisted core regions 102 may have a core radius in a range of 3.5 $\mu$m to 4.5 $\mu$m. Furthermore, each trench assisted core region of the plurality of trench assisted core regions 102 may have a core alpha ($\alpha_C$) value in a range of 4 to 9.

In accordance with an embodiment of the present disclosure, e each trench region 310 of the plurality of trench assisted core regions 102 may have a trench delta ($\Delta_T$) value in a range of -0.15 to -0.7.

In accordance with an embodiment of the present disclosure, each trench assisted core region of the plurality of trench assisted core regions 102 may have a trench radius in a range of 10 $\mu$m to 18 $\mu$m.

In accordance with an embodiment of the present disclosure, each trench region 310 of the plurality of trench assisted core regions 102 may have a trench alpha ($\alpha_T$) value in a range of 3 to 8.

In accordance with an embodiment of the present disclosure, at a wavelength of 1310 nanometers (nm), each trench assisted core region of the plurality of trench assisted core regions 102 may have a MFD in a range of 7.5 μm to 9.5 μm.

In accordance with an embodiment of the present disclosure, at a wavelength of 1550 nm, each trench assisted core region of the plurality of trench assisted core regions 102 may have a MFD in a range of 8.5 μm to 10.5 μm.

In accordance with an embodiment of the present disclosure, each trench assisted core region of the plurality of trench assisted core regions 102 may have a ZDW in a range of 1290 nm to 1350 nm. Further, each trench assisted core region of the plurality of trench assisted core regions 102 may have a Cable Cut-off of less than 1260 nm.

In accordance with an embodiment of the present disclosure, each non-trenched core region of the plurality of non-trenched core regions 104 may have a core delta ($\Delta_C$) value in a range of 0.45 to 0.8. In particular, each non-trenched core region of the plurality of non-trenched core regions 104 may have a core radius in a range of 3.5 μm to 5.5 μm. Moreover, each non-trenched core region of the plurality of non-trenched core regions 104 may have a core alpha ($\alpha_C$) value in a range of 4 to 9. Further, at a wavelength of 1310 nanometers (nm), each non-trenched core region of the plurality of non-trenched core regions 104 may have a MFD in a range of 7.5 μm to 9.5 μm. Furthermore, at a wavelength of 1550 nm, each non-trenched core region of the plurality of non-trenched core regions 104 may have a MFD in a range of 8.5 μm to 10.5 μm.

Each non-trenched core region of the plurality of non-trenched core regions 104 may have a ZDW in a range of 1290 nm to 1350 nm. And, each non-trenched core region of the plurality of non-trenched core regions 104 may have a Cable Cut-off of less than 1260 nm.

In accordance with an embodiment of the present disclosure, the non-trenched central core region 302 may have a core delta ($\Delta_C$) in a range of 0.45 to 0.8. In particular, the non-trenched central core region 302 may have a core radius in a range of 3.5 μm to 5.5 μm. Moreover, the non-trenched central core region 302 may have a core alpha ($\alpha_C$) value in range of 4 to 9. Further, at a wavelength of 1310 nanometers (nm), the trench assisted central core region 202 may have a MFD in a range of 7.5 μm to 9.5 μm. Furthermore, at a wavelength of 1550 nm, the trench assisted central core region 202 may have a MFD in a range of 8.5 μm to 10.5 μm. Additionally, the trench assisted central core region 202 may have a ZDW in range of 1290 nm to 1350 nm and the trench assisted central core region 202 may have a Cable Cut-off of less than 1260 nm.

In accordance with an embodiment of the present disclosure, the cladding region 106 may have a radius in a range of 62.5±0.35 μm. The cladding region 106 may have a delta ($\Delta$) in a range of -0.05 to 0.05. Specifically, in above stated configuration, the multicore fiber 300 may have a pitch in a range of 30 μm to 45 μm, an OCT in a range of 25 μm to 40 μm, a cross talk of less than or equal to -25 dB/10 km between the non-trenched central core region 302 and a non-trenched core region of the plurality of non-trenched core regions 104, a cross talk of less than or equal to -25 dB/10 km between a trench assisted core region of the plurality of trench assisted core regions 102 and a non-trenched core region of the plurality of non-trenched core regions 104, and a cross talk of less than or equal to -25 dB/10 km between the non-trenched central core region 302 and a trench assisted core region of the plurality of trench assisted core regions 102.

Advantageously, the multicore fiber 100, 200, 300 of the present disclosure provides a cost-effective and a compact multi-core fiber having reduced crosstalk, better confinement in a core region, and improved waveguide parameters. The present disclosure provides a multicore fiber 100, 200, 300 having multiple cores such that each core is not surrounded by a trench region. The design of multicore fiber 100, 200, 300 having cores with trench and core with trench arranged in an alternative arrangement reduces the overall cost of the development of the multicore fiber 100, 200, 300 as compared to multicore fiber where each core is trench assisted. The alternative arrangement of the plurality of trench assisted core regions 102 and the plurality of non-trenched core regions 104 helps in reducing the crosstalk as well. The alternative arrangement of the plurality of trench assisted core regions 102 and the plurality of non-trenched core regions 104 improves the bend performance in the multi-core fiber 100. Further, the plurality of trench assisted core region 102 has an immediate trench which removes the need of a buffer region between the up doped core region and the trench region. The removal of buffer region helps in achieving better confinement in the core region. Furthermore, the removal of buffer further reduces process steps and time to efficiently produce multicore fiber with less complexity, optimized waveguide parameters and reduced crosstalk.

The multicore fiber 100, 200, 300 may have a cable cut off wavelength of less than or equal to 1260 manometers (nm). Further, the multicore fiber 100, 200, 300 may have a mode field diameter in a range of 7.5 to 9.5 micrometres (μm) at 1310 nm wavelength. Furthermore, the multicore fiber 100 may have a crosstalk of less than -25 decibel (dB)/ 10 Kilometres (Km).

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. A multicore fiber (100, 200, 300) **characterized in that**:

   a cladding region (106);
   a plurality of non-trenched core regions (104); and
   a plurality of trench-assisted core regions (102) such that the plurality of non-trenched core regions (104) and the plurality of trench-assisted core regions (102) are arranged in a predefined lattice in the cladding region, wherein each of the plurality of trench-assisted core regions (102) are defined by a plurality of core regions (108) and a plurality of trench regions (110, 210, 310) surrounding the plurality of core regions (108), such that a radial thickness of an un-doped region between the plurality of core regions (108) and the plurality of corresponding trench region (110, 210, 310) is less than 1 micrometres ($\mu$m).

2. The multicore fiber (100, 200, 300) of claim 1, wherein the plurality of trench-assisted core regions (102) and the plurality of non-trenched core regions (104) are arranged alternatively and wherein the plurality of trench-assisted core regions (102) and the plurality of non-trenched core regions (104) are arranged at a first predefined radial distance from centre of the multicore fiber (100, 200, 300).

3. The multicore fiber (100, 200, 300) of claim 1, wherein the plurality of trench-assisted core regions (102) is in a range of 40% to 60% of a total number of core regions in the multicore fiber (100, 200, 300), wherein the total number of core regions is summation of the plurality of trench-assisted core regions (102) and the plurality of non-trenched core regions (104) in the multicore fiber (100, 200, 300).

4. The multicore fiber (100, 200, 300) of claim 1, further comprising a central core region (202) disposed in a centre of the cladding region (106) such that an effective refractive index of the central core region (202) is different than effective refractive index of other core regions.

5. The multicore fiber (100, 200, 300) of claim 5, wherein, when the central core region (202) is a trench assisted central core region, the trench assisted central core region is defined by a third maximum

refractive index ($n_{3max}$) such that the third maximum refractive index ($n_{3max}$) is less than the second maximum refractive index ($n_{2max}$) of the other trench assisted core regions, wherein the non-trenched central core region is defined by a first effective refractive index ($n_{1eff}$) such that the first effective refractive index ($n_{1eff}$) is greater than effective refractive indexes of other core regions of the multicore fiber (100, 200, 300), wherein the trench assisted central core region is defined by a second effective refractive index ($n_{2eff}$) such that the second effective refractive index ($n_{2eff}$) is less than effective refractive indexes of the other core regions of the multicore fiber (100, 200, 300).

**6.** The multicore fiber (100, 200, 300) of claim 1, wherein a first trench relative refractive index of a trench assisted central core region is less than second trench relative refractive index of trench assisted core regions.

**7.** The multicore fiber (100, 200, 300) of claim 1, wherein a glass diameter of the multicore fiber (100, 200, 300) is less than or equal to 125 ± 0.7 $\mu$m.

**8.** The multicore fiber (100, 200, 300) of claim 1, wherein each of the plurality of non-trenched core regions (104) is defined by a first maximum refractive index ($n_{1max}$), where each of the plurality of trench-assisted core regions (102) is defined by a second maximum refractive index ($n_{2max}$), wherein the first maximum refractive index ($n_{1max}$) is greater than the second maximum refractive index ($n_{2max}$), wherein a phase difference between a pair of nearest trench assisted core region (102) and non-trenched core region (104) is non-zero, and wherein the plurality of trench assisted core regions (102) and the plurality of non-trenched core regions (104) has different propagation constants, wherein a difference between effective refractive index of a trench assisted core region of the plurality of trench assisted core regions (102) and a non-trenched core regions of the plurality of non-trenched core regions (104) is not equal to zero, wherein the plurality of trench assisted core regions (102) and the plurality of non-trenched core regions (104) has equal diameter.

**9.** The multicore fiber (100, 200, 300) of claim 1, wherein the multicore fiber (100, 200, 300) has at least one of (i) a cable cut off wavelength less than or equal to 1260 nanometres (nm), (ii) a pitch to the glass diameter ratio of the multicore fiber (100, 200, 300) is in a range of 0.24 to 0.36, (iii) a crosstalk of the multicore fiber (100, 200, 300) is less than or equal to -25 dB/ 10 Km, and (iv) a mode field diameter of the multicore fiber (100, 200, 300) is in a range of 7.5 to 9.5 $\mu$m at 1310 nm wavelength and, a core multiplication factor is in a range of 0.01 to 0.045.

**10.** The multicore fiber (100, 200, 300) of claim 2, wherein the first predefined radial distance from a centre of the multicore fiber (100, 200, 300) is in a range of 22.5 $\mu$m to 37.5 $\mu$m.

**11.** A multicore optical fiber (100, 200, 300) comprising:

a cladding region (106);
a plurality of trench-assisted core regions (102), each comprising an up-doped core region (108), and a trench region (110, 210, 310) immediately surrounding the core region (108) with an interfacial un-doped region having a radial thickness less than 1 $\mu$m; and
a plurality of non-trenched core regions (104) comprising up-doped core regions without surrounding trench regions, wherein the trench-assisted core regions (102) and non-trenched core regions (104) are arranged in an alternating pattern within a predefined geometric lattice in the cladding region (106), wherein the trench-assisted core regions (102) and non-trenched core regions (104) have equal core diameters, and wherein the alternating pattern provides a crosstalk reduction of at least 20% compared to a homogeneous multicore fiber, with crosstalk measuring less than -25 dB/10 km.

**12.** The multicore optical fiber of claim 15, further comprising a central core region (202, 302) disposed at the center of the cladding region (106), wherein, when trench-assisted, the central core region has a third maximum refractive index (n3max) less than the second maximum refractive index (n2max) of other trench-assisted cores (102), and a trench relative refractive index less than peripheral trench-assisted cores or, when non-trenched, has a first effective refractive index (n1eff) greater than other core regions' indices.

**13.** The multicore optical fiber of claim 15, wherein the non-trenched core regions (104) have a first maximum refractive index (n1max) greater than a second maximum refractive index (n2max) of the trench-assisted core regions (102) (para. [00102]), and adjacent trench-assisted (102) and non-trenched cores (104) exhibit a non-zero phase difference ($\Delta\beta \neq 0$), and different propagation constants.

**14.** A method of manufacturing a multicore optical fiber (100, 200, 300) comprising:

preparing a plurality of non-trenched core rods (104), each comprising an up-doped core region surrounded by a pure silica cladding layer (106) with a first outer diameter;
preparing a plurality of trench-assisted core rods (102), each comprising an up-doped core region (108), a down-doped trench region (110, 210, 310) immediately surrounding the core region (108) with an interfacial un-doped region having a radial thickness less than 1 μm, and a pure silica cladding layer (106) with a second outer diameter equal to the first outer diameter; assembling the core rods (102, 104) into a preform by arranging the rods in an alternating pattern within a silica tube, and consolidating the silica tube to form a cladding region (106); drawing the preform into the multicore optical fiber (100, 200, 300) while maintaining the alternating pattern, and preserving a cladding diameter of 250 ± 0.7 μm or 200 ± 0.7 μm.

15. The method of claim 14, wherein consolidating the silica tube comprising heating the assembly to a temperature between 1600°C and 2300°C to fuse the core rods (102, 104) and silica tube into a monolithic cladding (106); and controlling the cooling rate to prevent stress-induced refractive index variations in the cladding (106).

**FIG. 1A**

FIG. 1B

200

$$101 \begin{bmatrix} 102 \\ 104 \\ 202 \end{bmatrix} \quad 102 \begin{bmatrix} 102a \\ 102b \\ 102c \end{bmatrix} \quad 104 \begin{bmatrix} 104a \\ 104b \\ 104c \end{bmatrix}$$

$$210 \begin{bmatrix} 210a \\ 210b \\ 210c \\ 210d \end{bmatrix}$$

**FIG. 2A**

**FIG. 2B**

**FIG. 3A**

**FIG. 3B**

<table>
<tr><td>Europäisches Patentamt<br>European Patent Office<br>Office européen des brevets</td><td style="text-align:center">**EUROPEAN SEARCH REPORT**</td><td>**Application Number**<br><br>EP 25 19 5493</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2011/182557 A1 (HAYASHI TETSUYA [JP])<br>28 July 2011 (2011-07-28)<br>* paragraph [0036] - paragraph [0037] *<br>* paragraph [0064]; figures 1, 3A, 8C *<br>----- | 1,2,5,<br>7-13<br>3,14,15<br>4,6 | INV.<br>G02B6/02<br>G02B6/036<br><br>ADD.<br>C03B37/027 |
| Y | JP 2017 075061 A (FURUKAWA ELECTRIC CO LTD) 20 April 2017 (2017-04-20)<br>* paragraph [0025] - paragraph [0029] *<br>* paragraph [0051] - paragraph [0052];<br>figures 1, 3, 6, 12 *<br>----- | 14,15 | |
| Y | US 2015/323735 A1 (ISHIDA ITARU [JP] ET AL) 12 November 2015 (2015-11-12)<br>* paragraph [0060] - paragraph [0062] *<br>* paragraph [0065] - paragraph [0069];<br>figures 5, 6 *<br>----- | 3 | |

| | |
|---|---|
| | **TECHNICAL FIELDS SEARCHED (IPC)**<br><br>G02B<br>C03B |

The present search report has been drawn up for all claims

| Place of search | Date of completion of the search | Examiner |
|---|---|---|
| The Hague | 14 January 2026 | Mouget, Mathilde |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 5493

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2026

| Patent document cited in search report | | | Publication date | Patent family member(s) | | | Publication date |
|---|---|---|---|---|---|---|---|
| US 2011182557 | A1 | | 28-07-2011 | JP | 5678679 | B2 | 04-03-2015 |
| | | | | JP | 2011170336 | A | 01-09-2011 |
| | | | | US | 2011182557 | A1 | 28-07-2011 |
| JP 2017075061 | A | | 20-04-2017 | JP | 6581877 | B2 | 25-09-2019 |
| | | | | JP | 2017075061 | A | 20-04-2017 |
| US 2015323735 | A1 | | 12-11-2015 | JP | 2015212791 | A | 26-11-2015 |
| | | | | US | 2015323735 | A1 | 12-11-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202411061049
- US 8965165 B
- US 20230204851 A1
- US 20230204849 A1
- US 9817183 B2